# EUROPÄISCHE PATENTSCHRIFT

(11) **EP 0 890 109 B1**
(45) Veröffentlichungstag und Bekanntmachung des Hinweises auf die Patenterteilung: **02.05.2001**
(21) Anmeldenummer: 97916390.4
(22) Anmeldetag: 26.03.1997
(51) Int. Cl.: G01R 31/00, H04L 12/40

(54) **VERFAHREN ZUR PRÜFUNG UND SICHERUNG DER VERFÜGBARKEIT EINES VERNETZTEN SYSTEMS**
PROCESS FOR TESTING AND ENSURING THE AVAILABILITY OF A NETWORKED SYSTEM
PROCEDE PERMETTANT DE VERIFIER ET D'ASSURER LA DISPONIBILITE D'UN SYSTEME EN RESEAU

(30) Priorität: 26.03.1996 DE 19611944; 19.11.1996 WO PCT/DE96/05088
(43) Veröffentlichungstag der Anmeldung: 13.01.1999
(73) Patentinhaber: DaimlerChrysler AG, 70567 Stuttgart (DE)
(72) Erfinder: REEB, Max, D-73104 Börtlingen (DE); Setzer, Jürgen, D-75428 Illingen (DE); Minuth, Jürgen, D-73054 Eislingen (DE)
(86) Internationale Anmeldenummer: EP9701533
(87) Internationale Veröffentlichungsnummer: WO9736183

(56) Entgegenhaltungen:
- EP-A- 0 287 992
- DE-A- 4 212 742
- US-A- 4 908 822

## Beschreibung

Die Erfindung bezieht sich auf ein Verfahren zur Prüfung und Sicherung der Verfügbarkeit eines vernetzten Systems. Dabei betrifft das Verfahren die Sicherung der Verfügbarkeit eines vernetzten Systems u.a. auch in Zusammenhang mit möglichen Bezugspotentialverschiebungen.

Aus der **DE 42 12 742 A1** ist ein Verfahren zur Fehlererkennung bei einem Datenbus mit zwei Busleitungen bekannt, die über Endstufen zumindest eines der Busteilnehmer angesteuert werden und wobei die Möglichkeit besteht, daß die beiden Endstufen eines Busteilnehmers bei Inbetriebnahme des Datenbusses gleichzeitig angesteuert werden. Dabei ist vorgesehen, daß das Potential einer Busleitung in seiner Höhe bestimmt wird und daß bei fehlender Übereinstimmung mit einem Sollwert eine Fehlermeldung durch den Busteilnehmer erzeugt wird.

Die **US 4,908,822** beschreibt ein Multiplex-System zur Adressierung, Steuerung und Zustandsüberwachung einer Vielzahl von elektrischen Einrichtungen, die über ein Fahrzeug verteilt sind. Bestandteil des Multiplex-Systems sind zwei Busleitungen, über die jeweils identische Nachrichten seriell übertragen werden. Dabei werden die Busleitungen jeweils als Eindraht-Busse betrieben, die eine Mehrzahl von Mikro-Controllern addressieren, von letztwelchen jeder jeweils zwei Steuerelemente ansteuert. Zu Prüfzwecken können im Tastverhältnis veränderliche Signale den Busleitungen aufgeprägt werden, um dadurch adressierbare Steuerelemente an- und abzuschalten. Schaltmittel der Controller stellen Stromsignale zur Darstellung des Zustands des jeweils angesteuerten Elements bereit.

Aufgrund gegenständlichen Zusammenhangs wird ferner auf die DE 19611944 A1 (im folgenden **[1]**), auf die WO97/36399 (im folgenden **[2]),** auf die WO97/36398 (im folgenden **[3])** sowie auf die mit der vorliegenden Anmeldung zeitgleich eingereichte Patentanmeldung PCT/EP97/01534 (im folgenden **[4]**) verwiesen.

Dabei beschreibt **[1]** einen integrierten Halbleiterschaltkreis für ein elektronisches Steuergerät mit Microcontroller, wobei das Steuergerät kommunikationsfähig mit anderen mikrokontrollierten Steuergeräten ist, die zu diesem Zweck ein Controller Area Network (CAN) bilden in dem protokollbasiert über eine Zweidrahtleitung kommuniziert wird, wozu jedes Steuergerät eine Bus-Protokollfunktion besitzt. Erfindungsgemäß maximiert jener Schaltkreis in erster Verkörperung die Verfügbarkeit des CANs dadurch, daß er zum einen eine busfehlertolerante Transceive-Funktion realisiert, welche eine Kommunikation auch noch bei Vorliegen eines Busfehlers erlaubt, und zum anderen vermöge Busfehler-Erkennungs- und Behandlungsmitteln, die den Bus im Fehlerfalle von seinen normalen Teilnehmerabschlüssen freischalten und umterminieren. Dadurch wird - unter Aufrechterhaltung einer Kommunikationsfähigkeit - verhindert, daß insbesondere bei sehr großen CANs aus Teilnehmern busweit parasitäre Ströme über den Bus in die Fehlerstelle abfließen, die im Falle eines batteriegestützten Bussystems die Verfügbarkeit des Netzes auf den Erschöpfungszeitpunkt der Batterie begrenzen. Jener Schaltkreis leistet insoweit eine Erhöhung der Netz-Verfügbarkeit integral auf zwei Ebenen, nämlich auf der Kommunikationsebene und auf der Systemenergieebene. Eine andere Strategie ebenfalls zur Erhöhung der Verfügbarkeit verfolgt eine andere Verkörperung jenes Schaltkreises.

**[2]** beschreibt ein Verfahren zur Bestimmung von Potentialverschiebungen zwischen Elektronikmodulen in einem Drahtbusnetz oder der Übereinstimmungsgüte ihrer Kommunikationsbetriebspegel im Netzverbund, wobei das Busmedium aus wenigstens einem Draht besteht, der mit den Elektronikmodulen galvanisch verbunden ist. Erfindungsgemäß wird in wenigstens einem Busteilnehmer (Prüfteilnehmer) sendeseits eine Offsetspannung zu (wenigstens) einem (der beiden) dominanten, normalen Quellenpegel addiert und vom Prüfteilnehmer in diesem Zustand eine Prüf-Botschaft ins Busnetz gesendet. Dabei wird der Quellenpegel in vorbestimmter Weise verändert. Je nachdem, ob der (wenigstens) eine (der beiden) dominante(n) Quellenpegel durch die jeweils einstellbare Offsetspannung abgesenkt oder angehoben wird, verliert oder gewinnt der (bezugs-)potentialfehlerhafte Busteilnehmer seine Empfangsfähigkeit. Dies wird ausgewertet. Des weiteren beschreibt **[2]** eine Vorrichtung, die mit der Transceiver-Funktion eines Busteilnehmers verbundene bzw. verbindbare, kooperative Potentialsteuermittel umfaßt und mit diesen zusammen wenigstens in Bezug auf Teile der Sende- und/oder Empfangsmittel der Transceiver-Funktion wenigstens eine steuerbare Spannungsquelle realisiert, welche wenigstens einen im Sendefall dominanten Quellenpegel und/oder wenigstens einen im Empfangsfall diskriminanten Signalpegel zu beeinflussen erlaubt.

**[3]** beschreibt einen Halbleiterschaltkreis für ein elektronisches Gerät mit wenigstens einem Microcontroller. Der Schaltkreis umfaßt wenigstens einen Spannungsregler zur Bereitstellung aus einer ersten Versorgungsspannung wenigstens einer zweiten Versorgungsspannung für den wenigstens einen Microcontroller und für mit diesem kooperative Schaltkreise des Gerätes. Als Monolith umfaßt jener Schaltkreis ferner eine Transceiver-Funktion mit Sende- und Empfangsmitteln zur Kopplung eines Microcontrollers an einen Zweidrahtbus. Fortbildungsgemäß umfaßt jener Schaltkreis ferner Watchdog-Funktionen, verschiedene Weck-Funktionen und ein Interface, über das ein serieller Datenaustausch mit dem wenigstens einen Microcontroller möglich ist. Des weiteren kann er Mittel zur netzweiten Ermittlung von Busteilnehmern mit Bezugspotentialfehlern und zur Quantifizierung solcher Fehler aufweisen. Diverse Fortbildungen dieser Mittel in Verbindung mit besonderen Ausbildungen des Empfangsteiles des Transceivers setzen ein auf den Schaltkreis gestützes Bus-Netzwerk etwa vom CAN-Typ in die Lage, noch vor dem ersten Auftreten eines pegelfehlerbedingten Betriebsausfalles den noch vorhandenen Fehlerabstand als wichtigstes Maß der Busgüte latent zu bestimmen.

**[4]** beschreibt ein Verfahren zum Prüfen der Massekontaktierung von Teilen eines busvernetzten Systems. Dabei werden eingeschwungene Potentiale auf Busleitungen mit busteilnehmerintern generierbaren Referenzpotentialen verglichen, und es wird aus diesem Vergleich jeweils auf die Qualität der Anbindung des betrachteten Busteilnehmers an den netzweit gemeinsamen Massebezugsleiter geschlossen. Ferner wird eine Vorrichtung zur Durchführung dieses Verfahrens vorgeschlagen.

Vernetzte Systeme, die sich auf einen Draht-Bus als Kommunikationsmedium stützen, gewinnen für Steuerungszwecke zunehmend an Bedeutung. Beispiele sind Busnetze nach J1850- oder-CAN-Standard.

In derlei vernetzten Systemen kommuniziert eine Vielzahl von Busteilnehmern (vorzugsweise handelt es sich dabei um elektronische Steuergeräte), von denen jeder einen Mikroprozessor bzw. einen Microcontroller enthält, über ein Busnetz miteinander, welches z.B. im Falle eines CANs aus zwei normalerweise gegenphasig dominant getasteten Leiteradern bzw. Drähten besteht.

Gleichwohl gibt es auch Busnetze, die eine/n einzige/n Leiterader bzw. Draht über einer meistens auch als Stromversorgungsleiter dienenden elektrischen Sammel schiene oder Sammelfläche als Busmedium nutzen. Dabei geschieht die Kommunikation der Teilnehmer über das Busnetz in jedem Falle durch Sende-/Empfangsmittel - sog. Bus-Transceiver -, welche als wesentlicher Bestandteil eines jeden Busteilnehmers denselben jeweils physikalisch an das Busnetz ankoppeln.

Diese Transceiver zum Senden und Empfangen der Datenbotschaften wandeln letztere vom Logikpegel innerhalb des betreffenden Busteilnehmers in Signalpegel auf der bzw. den Busader/n um und umgekehrt. Bezüglich verschiedener, im Rahmen der vorliegenden Erfindung zweckmäßiger Merkmale eines geeigneten Bus-Transceivers wird an dieser Stelle auf **[1]** und **[3]** verwiesen.

Im Interesse eines hohen Störabstandes werden bei Systemen in störungskritischer Umgebung bevorzugt zweidrähtige Busnetze verwendet, da eindrähtige über einer Bezugsleiterfläche empfindlicher gegen allfällige Potentialstörungen und insbesondere auch gegen elektromagnetische Störein- und -abstrahlung sind und wegen ihrer insoweit begrenzten hochfrequenten elektromagnetischen Verträglichkeit (EMV) bevorzugt bei geringeren Datenraten Anwendung finden. Solche Zweidraht-Busnetze können bei geeigneter Beschaffenheit ihrer Transceiver auch im vorgenannten Eindraht-Betriebsmode - d.h. eine der beiden Busadern gegenüber einem netzweit verfügbaren Bezugspotential - ggfs. mit geringerer Datenrate (not-) betrieben werden. In derlei Systemen geschieht die normale Kommunikation durch gegenphasige Umtastung der beiden Leitungsaderpotentiale jeweils von einem rezessiven auf einen dominanten Signalpegel, d.h. differentiell. Bei eindrähtigem (Not-)Betrieb oder in Eindrahtnetzen geschieht die Kommunikation in der Regel durch Umtastung der einen Busader von einem rezessiven auf einen dominanten Signalpegel gegenüber der Bezugspotentialschiene bzw. -leiterfläche. Daten werden dabei gesendet, indem die Busleitung(en) mit unterschiedlichen Spannungspegeln beaufschlagt werden. Die Daten werden dadurch ermittelt, daß empfangseitig die entsprechenden Spannungspegel ausgewertet werden. Wenn dies in irgendeiner Weise beeinträchtigt ist, dann liegen betriebliche Kommunikationsstörungen vor, welche je nach Auswirkung die Verfügbarkeit des vernetzten Systems teilweise oder vollständig aufheben.

Sowohl bei eindrähtigen als auch bei zweidrähtigen Bussystemen werden deshalb z.B. die oben genannten Signalpegel durch besondere Schaltungsmaßnahmen innerhalb gewisser Toleranzfenster gehalten, damit eine störungsfreie Signalübertragung zwischen allen Bus-Transceivern immer möglich ist. Um Daten zu senden, wird der Busdraht sendeseitig mit einem Spannungspegel beaufschlagt, welcher oberhalb bzw. unterhalb eines Diskriminationspegels liegt, welcher im empfangenden Teilnehmer als Schwellwert definiert ist und über- bzw. unterschritten werden muß, damit das Anliegen des vorgenannt sendeseitigen Spannungspegels als Wahrheitsbedingung erkannt werden kann. Dadurch wird erreicht, daß bei gewissen, zulässigen Abweichungen eines Bezugspotentials jeweils einzelner Teilnehmer untereinander trotzdem noch ein Datenaustausch unter den Teilnehmern möglich ist. In der Praxis wird für die Generation entsprechender Pegel und Toleranzfenster z.B. ausgenutzt, daß z.B. der Mikroprozessor bzw. Microcontroller in jedem Busteilnehmer ohnehin eine innerhalb enger Grenzen zu haltende Betriebsspannung benötigt, die in der Regel mittels eines vom Busteilnehmer mitumfaßten Spannungsreglers aus einem übergeordneten Potential abgeleitet wird. Von dieser relativ genauen (teilnehmerinternen) Betriebsspannung ist dann der (eine der beiden) im Sendefalle dominante(n) Quellenpegel, von dem aus der (jeweiligen) Busader auf rezessivem Pegel Daten gewissermaßen "aufgetastet" werden, bestimmt. So findet z.B. in einem Zweidraht-Bussystem nach CAN-Standard ein dominanter High-Pegel von z.B. 5 Volt Anwendung, der einer gängigen Versorgungsspannung von 5 Volt für integrierte Schaltkreisfunktionen entspricht, die in jedem Busteilnehmer ohnehin mittels elektronischer Regelungsmittel relativ genau konstant gehalten werden muß.

Besagte Transceiver sind allgemein so ausgeführt, daß sie die entsprechenden Pegelwandlungen der Datenbotschaften auch dann noch fehlerfrei durchführen, wenn die Bezugspegel der Transceiver gegeneinander gewisse zulässige, jedenfalls einen maximalen Wert jeweils nicht übersteigende Potentialdifferenzen gegeneinander aufweisen.

Übertragungsprobleme treten in solchen Systemen beispielsweise auf, wenn die Übereinstimmung (innerhalb spezifizierter Toleranzspannen) des/der sendemäßig auf der Busader/den Busadern dominant sich einstellenden Buspegel/s und/oder des/der empfangsmäßig darauf abgestimmt wirksamen Diskriminationspegel/s zur Wahrheitsbewertung von Signalflanken bzw. -potentialen im Busnetz aus irgend welchen Gründen leidet bzw. sich so weit verschlechtert, daß die o.e. maximalen Werte überschritten werden.

Ähnliches gilt analog für eine netzweite Störung des rezessiven Pegelfensters.

In entsprechender Weise kann beispielsweise ein ein gewisses Grenzmaß übersteigendes Signalüberschwingen auf der Busbitschulter - etwa aufgrund wellenimpedanzunstimmiger Abschlüsse der Busleitung bei Teilnehmern - und/oder nicht (mehr) aufeinander angepaßter Signalanstiegszeiten zu Übertragungsproblem kommen, die - wenn sie mit fehlerpotentialbasierten zusammentreffen - die Verfügbarkeit eines vernetzten Systems nicht nur aufheben können, sondern die Beseitigung der Fehler in ihrer Gesamtheit sehr erschweren.

Zwecks höchstmöglicher Verfügbarkeit können Zweidraht-Busnetze und die darin verwendeten Transceiver vorzugsweise so ausgebildet werden, daß z.B. im Falle eines Kurzschlusses eines Busdrahtes z.B. mit der Bezugspotentialschiene bzw. -leiterfläche die vorgenannte Notkommunikation über den nicht fehlerbetroffenen anderen Busdraht in besagtem Eindraht-Betriebsmode automatisch ermöglicht und eingeleitet wird.

Dabei sind dann allerdings die zulässigen Fehler bzw. möglichen Toleranzspannen z.B. für die den rezessiven und/oder dominanten Kommunikationpegel für eindrähtigen (Not-)Betrieb bzw. in Eindrahtnetzen kleiner bzw. schmäler als bei differentiellem zweidrähtigem (Normal-) Betrieb.

Dies kann zur Folge haben, daß im Falle einer bereits weitgehend stattfindenden Toleranzausschöpfung für einen Kommunikationspegel im differentiellen Zweidrahtbetrieb bei dann auftretendem Kurzschluß eines der beiden Busdrähte der zuvor für den zweidrähtigen Betrieb noch zulässige Pegelfehler an dem vom Kurzschluß nicht betroffenen Busdraht schon außerhalb der Toleranzspanne für zulässige Pegelfehler im eindrähtigen (Not-)Betrieb liegt, wodurch ein solcher Notbetrieb dann verhindert werden kann.

Der praktisch wichtigste Fall entsprechender Pegelstörungen sind lokal teilnehmerinduzierte Potentialstörungen. Sie treten auf, wenn z.B. ein Versorgungspotential aller Busteilnehmer von einer systemweit genutzten, d.h. räumlich ausgedehnten Stromschiene oder -fläche des Systemträgers bezogen wird, innerhalb dieser jedoch ein fehlerhafter Spannungsabfall auftritt, so daß das betroffene Versorgungspotential - vom Busmedium aus gesehen - nicht mehr für alle Busteilnehmer gleich ist. Die ausgedehnte Stromschiene oder -fläche hat dann - vom Busmedium aus gesehen - ihre Funktion als systemweite Äquipotentialfläche verloren.

Im beispielhaften Falle eines Steuergerätes in einem Verkehrsmittel als Systemträger, dessen gesamte Karosse bekanntlich als Verteilungsleiterfläche ("Masse") dient, kann derlei durch einen fehlerhaften Längsspannungsabfall in dieser Masseläche etwa durch einen hohen Fehlerstrom oder aber durch eine fehlerhafte Masseverbindung eines Busteilnehmers sein, welche unter Beaufschlagung mit dem normalen Massestrom des betreffenden Teilnehmers einen zu großen lokalen Spannungsabfall und insoweit eine Anhebung des Massebezugspotentials des betroffenen Teilnehmers gegenüber den Massepotentialen übriger Teilnehmer im Busnetz zur Folge hat. Infolgedessen kann ein solcher Teilnehmer über den Bus dann z.B. nicht mehr ansprechbar sein, weil um den Betrag seiner Massefußpunkt-Fehlerspannung gegenüber anderen Teilnehmern das Diskriminationspegelfenster des an sich fehlerfreien Empfängers seines Bus-Transceivers angehoben erscheint, im Teilnehmer dann also für eine Kommunikation real zu niedrig liegt.

Anhand dieses praktischen Beispiels von bezugspotentialfehlerbedingten Störungen versteht sich, daß bei Systemen mit sehr vielen Teilnehmern die Verfügbarkeit des Systems und insoweit die uneingeschränkte Nutzbarkeit eines durch das System gesteuerten Systemträgers, z.B. Verkehrsmittels, nur durch Sicherstellung ausreichender Abstände von zuässigen Grenzwerten des/der auf der Busader/den Busadern sich einstellenden Buspegel/s und/oder des/der empfangsmäßig darauf abgestimmt wirksamen Diskriminationspegel/s zur Wahrheitsbewertung von Signalflanken bzw. -zuständen gewährleistbar ist. Da sich beispielsweise Potentialfehler etwa im Massepfad von Steuergeräten in Verkehsmitteln vorzugsweise durch Korrosion über der Zeit schleichend entwickeln, erfordern hochvernetzte Systeme (mit vielen Teilnehmern) gegenüber niedrig vernetzten Systemen (mit weniger Teilnehmern) einen erhöhten Prüfaufwand, um eine ausreichend sichere Verfügbarkeit bzw. Nutzbarkeit gewährleisten zu können.

So wie für die Signalpegel gilt dies in analoger Weise auch für andere, systemweit Grenzwerten unterliegende Übertragungsparameter, wie z.B. die Flankenanstiegsübereinstimmung (Slewrate Compliance), das Überschwingungsdämpfungsmaß, etc., welche in Verbindung mit ausreichenden Grenzwertabständen der oben genannten Signalpegel ein Maß für die Bus- bzw. Netzgüte definieren, welches seinerseits zur Ableitung einer die Sicherheit der Verfügbarkeit des Gesamtsystems charakterisierende Größe heranziehbar ist.

Es ist daher Aufgabe der Erfindung, ein Verfahren zur Prüfung und Sicherung der Verfügbarkeit eines vernetzten Systems vorzuschlagen, welches den für eine sichere Verfügbarkeit zu leistenden Aufwand minimiert.

Gemäß **Anspruch 1** wird diese Aufgabe verfahrensmäßig dadurch gelöst, daß auf dem Busnetz anstehende Signale unter netzweit für alle Teilnehmer definierten Bedingungen von einzelnen Teilnehmern während des Betriebs des Systems bezüglich wenigstens eines Signalkriteriums diskriminiert oder geprüft oder gemessen werden, wobei jeweils für jedes Signalkriterium bezüglich eines jeden Teilnehmers charakteristische Zustands-Daten erzeugt und in wenigstens einer Zustands-Map des Systems gesammelt und angeordnet werden, wobei diese Zustands Daten sowohl den aktuellen als auch wenigstens einen früheren Zustand hinsichtlich der geprüften Teilnehmer bezüglich des wenigstens einen Kriteriums charakterisieren, und daß aus diesen Zustands-Daten wenigstens ein Fehlerabstandsmaß des vernetzten Systems bezüglich des wenigstens einen Kriteriums gewonnen wird.

Dadurch kann während des normalen Systembetriebs, jedenfalls aber anläßlich Wartungen des Systemträgers, d.h. in dessen Inspektionsintervallen, erkannt werden, ob im Systembetrieb ein noch ausreichendes oder nicht mehr ausreichendes Maß des Fehlerabstandes des Systems hinsichtlich des wenigstens einen Kriteriums vorlag bzw. vorliegt und ggfs. einer präventiven Maßnahme bedarf, welche die Verfügbarkeit des Systems weiterhin sichert bzw. im Falle latenter Beeinträchtigung eines Notbetriebes die potentielle Möglichkeit des Notbetriebes wieder herstellt. Durch eine so noch vor dem ersten Auftreten eines Kommunikationsfehlers bzw. -defekts gegebene, vorauseilende Serviceabilty wird die Verfügbarkeit hochvernetzter bzw. -ausgerüsteter Systemträger maximiert; unnötige Service-Routinen können entfallen.

Im Hinblick auf Potentialfehler bei Teilnehmern wir die Aufgabe gemäß **Anspruch 2** verfahrensmäßig dadurch gelöst, daß die Funktionsfähigkeit von Daten empfangenden Teilnehmern überprüft wird, indem Signale mit einem gegenüber dem normalen Senden von Daten verschobenen Spannungspegel gesendet werden, indem weiterhin überprüft wird, bei welchem Maße der Verschiebung des Spannungspegels zumindest einzelne Teilnehmer keine Daten mehr empfangen können und daß wenigstens eine Zustands-Map angelegt wird, in der bezogen auf die einzelnen Daten empfangenden Teilnehmer in Form von Zustands-Daten gespeichert wird, bei welcher Verschiebung besagten Spannungspegels zumindest einzelne Teilnehmer keine Daten mehr empfangen können (13.3) und/ oder bei welcher (weiteren) Verschiebung besagten Spannungspegels welcher bzw. welche Teilnehmer als letzte bzw. letzter noch Daten empfangen können bzw. kann.

Durch dieses Verfahren können die Daten empfangenden Teilnehmer hinsichtlich der Lage ihres Bezugspotentiales relativ zur Lage des Bezugspotentiales der ausgesandten Daten überprüft werden. Indem also das Bezugspotential der ausgesandten Daten kontinuierlich oder in Schritten variiert wird bis gerade keine Daten mehr empfangen werden können, kann unter Berücksichtigung der festgelegten Toleranz, die unter der Annahme festgelegt wurde, daß keine Abweichungen im Bezugspotential auftreten, festgestellt werden, inwieweit das Bezugspotential eines Daten empfangenden Teilnehmers gegenüber dem Sollwert verschoben ist. Durch eine Auswertung der in der Map gespeicherten Zustands-Daten kann vorteilhaft das Ausmaß erkannt werden, in dem ein Teilnehmer bzw. die Gesamtheit aller Teilnehmer des vernetzten Systems sich in einem potentialkritischen Zustand befindet. Damit ist es also möglich, eine Verschiebung des Bezugspotentiales einzelner Teilnehmer in einem vernetzten System frühzeitig zu erkennen, d.h. bereits dann, wenn die Verschiebung noch nicht dazu geführt hat, daß eine Kommunikation dieses Teilnehmers mit anderen Teilnehmern nicht mehr möglich ist, weil aufgrund von Bezugspotentialdifferenzen die Signalspannungspegel nicht mehr gegen die empfangsseitigen Schwellwerte diskriminiert werden können.

Ebenfalls im Hinblick auf Potentialfehler bei Teilnehmern wir die Aufgabe gemäß **Anspruch 3** verfahrensmäßig dadurch gelöst, daß die Funktionsfähigkeit von Daten sendenden Teilnehmern überprüft wird, indem Signale von zumindest einem Daten sendenden Teilnehmer ausgesendet werden, indem weiterhin überprüft wird, inwieweit der Pegel der empfangenden Signale von dem Sollwert des Signalpegels beim normalen Senden von Daten abweicht, und daß wenigstens eine Zustands-Map angelegt wird, in der bezogen auf die einzelnen Daten sendenden Teilnehmer ein Maß für die ermittelte Abweichung gespeichert wird.

Durch dieses Verfahren können die Daten sendenden Teilnehmer hinsichtlich der Lage ihres Bezugspotentiales relativ zur Lage des Bezugspotentiales der empfangenen Daten überprüft werden. Indem also in einem empfangenden Teilnehmer ein empfangsdiskriminantes Bezugspotential, beispielsweise der Spannungspegel, dessen Über- bzw. Unterschreiten durch das Datensignal überwacht wird, kontinuierlich oder in Schritten variiert wird, bis gerade keine Daten mehr empfangen werden können, kann unter Berücksichtigung der bei fehlender Abweichungen des Bezugspotentials festgelegten Toleranz festgestellt werden, inwieweit das Bezugspotential des Daten sendenden Teilnehmers gegenüber seinem Sollwert verschoben ist. Durch eine Auswertung der in der Zustands-Map gespeicherten Zustands-Daten kann vorteilhaft das Ausmaß erkannt werden, in dem ein Teilnehmer bzw. die Gesamtheit aller Teilnehmer des vernetzten Systems sich in einem kritischen Zustand befindet.

Gemäß **Anspruch 4** werden beim Verfahren nach Anspruch 2 die Signale mit einem gegenüber dem normalen Senden von Daten verschobenen Signalpegel von wenigstens einem Teilnehmer des vernetzten Systems gesendet.

Dadurch kann zum einen vorteilhaft der Hardwareaufwand minimiert werden, indem z.B. nur ein Teilnehmer des vernetzten Systems diese Funktion mit übernimmt. Außerdem ist eine Festlegung geeigneter Prüfzeitpunkte in flexiblerer Weise möglich. Derartige Überpfrüfungen beispielsweise dann angestoßen werden, wenn aufgrund der Betriebsbedingungen des Netzes festgestellt wird, daß der Bus momentan nicht ausgelastet ist. Es können dann keine Störungen des Datenbusses im laufenden Betrieb durch diese Überprüfungen auftreten.

Gemäß **Anspruch 5** wird beim Verfahren nach Anspruch 3 die Überprüfung von wenigstens einem Daten empfangenden Teilnehmern durchgeführt.

Dadurch kann zum einen vorteilhaft der Hardwareaufwand minimiert werden, indem z.B. nur ein Teilnehmer des vernetzten Systems diese Funktion mit übernimmt. Außerdem ist eine Festlegung geeigneter Prüfzeitpunkte in flexiblerer Weise möglich. Derartige Überpfrüfungen können beispielsweise dann angestoßen werden, wenn aufgrund der Betriebsbedingungen des Netzes festgestellt wird, daß der Bus momentan nicht ausgelastet ist. Es können dann keine Störungen des Datenbusses im laufenden Betrieb durch diese Überprüfungen auftreten. Außerdem wird durch die Überprüfung, die von einem Teilnehmer durchgeführt wird, der Daten empfängt, nur der Betrieb dieses einen Teilnehmers beeinflußt. Der Betrieb des übrigen Netzes bleibt davon unberührt.

Gemäß **Anspruch 6** wird beim Verfahren nach Anspruch 1 aus den Zustands-Daten das kleinste Fehlerabstandmaß unter einzelnen Teilnehmern bezüglich des wenigstens einen Kriteriums gewonnen und der betreffende Teilnehmer in der Zustands-Map entsprechend markiert.

Dadurch kann kann während des normalen Systembetriebs, jedenfalls aber anläßlich Wartungen des Systemträgers, d.h. in dessen Inspektionsintervallen, erkannt werden, ob und ggfs. welcher der Systemteilnehmer im Systembetrieb den geringsten und möglicherweise nicht mehr ausreichenden Fehlerabstand hinsichtlich des wenigstens einen Kriteriums aufwies bzw. aufweist und ggfs. einer präventiven Maßnahme bedarf, damit die Verfügbarkeit des Systems auch weiterhin sicher und die Möglichkeit seines Notbetriebes jederzeit sicher gegeben ist. Vorteilhafterweise kann durch entsprechende Auswertung der in der Zustands-Map abgelegten Daten auch erkannt werden, ob beispielsweise eine ganz spezifische Gruppierung von Teilnehmern sich in einem kritisch geringen Fehlerabstand der Kommunikation befindet, beispielsweise im Falle des Vorliegens von Potentialfehlern etwa Teilnehmer eines Stromversorgungs-Clusters.

In dem Falle, daß bei einem Teilnehmer bereits ein Kommunikationsfehler aufgrund nicht mehr ausreichenden Fehlerabstandes des wenigstens einen Kriteriums vorliegt, wird unmittelbar Aufschluß über den fehlerhaften Teilnehmer erlangt, und die bei ihm wirksame Fehlerursache ist aus der Zustands-Map problemlos verifizierbar.

Gemäß **Anspruch 7** wird das Verfahren anläßlich der normalen Inbetriebnahme und/oder normalen Außerbetriebsetzung des Systemträgers durchgeführt.

Durch diese Maßnahme kann in vorteilhafter Weise schon bei der Inbetriebnahme des Systemträgers eine Frühwarnung ausgelöst werden, wenn mit einem fehlernahen Betrieb gerechnet werden müßte, oder es kann der allerjüngste/letzte Stand vor dem Auftreten eines fehlernahen Systemzustandes anläßlich einer weiteren Inbetriebnahme festgehalten werden. Während das erste bevorzugt der Sicherheit nützt, kann das zweite den Service des Systems erheblich erleichtern.

Gemäß **Anspruch 8** wird das Verfahren im Verlaufe eines jeden Betriebes des Systems wiederholt durchgeführt. Dadurch können in vorteilhafter Weise auch während des Netzbetriebes sporadisch auftretende Unregelmäßigkeiten und Fehlerabstandsschwund statistisch erfaßt und in Datenform in der Zustands-Map abgelegt werden.

Gemäß **Anspruch 9** wird bei dem Verfahren nach Anspruch 1 oder 6 das ein Anstiegszeitmaß, ein Überschwingmaß oder ein Beruhigungszeitmaß eines Datensignals bei bzw. nach dessen Zustandsänderung diskriminiert oder geprüft oder gemessen. (Allmähliche) Abweichungen von der Norm außerhalb zulässiger Toleranzen bei einzelnen Teilnehmern im vernetzten System werden so frühzeitig erkannt, d.h. bereits in einem Stadium, in dem die normale Kommunikation innerhalb des Gesamtsystems noch nicht gestört ist. Dies ist sehr wichtig, da z.B. reflexionsbedingte Kommunikationsstörungen bei erst einmal starker Ausprägung ursächlich meist nur aufwendig zu diagnostizieren sind.

Bei der Fortbildung des Verfahrens nach Anspruch 1 oder 6 gemäß **Anspruch 10** wird ein Bezugspotential einzelner Teilnehmer im vernetzten System diskriminiert oder geprüft oder gemessen. Dadurch wird eine (allmähliche) Verschiebung des Bezugspotentials einzelner Teilnehmer im vernetzten System frühzeitig erkannt, d.h. bereits in einem Stadium, in dem die Verschiebung des Bezugspotentials eines Teilnehmers noch nicht dazu geführt hat bzw. ausreicht, daß die normale Kommunikation innerhalb des Gesamtsystems bzw. dieses Teilnehmers mit einem oder mehreren anderen Teilnehmer/n gestört oder unmöglich geworden ist. Dies ist ein wichtiges Merkmal zur Gewährleistung sicherer z.B. eindrähtiger Notbetriebsmöglichkeiten.

Gemäß **Anspruch 11** erfolgt die Diskrimination oder Prüfung oder Messung besagten Bezugspotentials einzelner Teilnehmern im vernetzten System durch Erfassung wenigstens eines rezessiven oder dominanten Signalpegels in einzelnen Teilnehmern.

Diese Fortbildung des Verfahrens ist besonders vorteilhaft nutzbar, wenn die Teilnehmer im System ohnehin Diskriminations-, Prüf- oder Meßmittel für Pegelwerte enthalten. Es ist dann vorteilhaft eine Minimierung des Hardwareaufwandes möglich, indem z.B. auf Mittel für eine sendeseitige Signalpegelbeeinflussung verzichtet werden kann. Die Vorteile nehmen dabei über zunehmender Auflösung der von den Teilnehmern im System mitumfaßten Diskriminations-, Prüf- oder Meßmittel für Pegelwerte zu. Solche Mittel können beispielsweise Bestandteile des Empfängerteils des Transceivers von Teilnehmern (vgl. **[2], [3])** oder aber sonstigen A/D-Wandlungsmitteln als Bestandteil eines den Transceiver mitumfassenden Schaltkreises zugeordnet sein, vgl. **[4].**

Die Festlegung geeigneter Prüfzeitpunkte ist sehr flexibel möglich. Indem die Diskriminations-, Prüf- oder Meß- funktion in die Software zum Betreiben des vernetzten Systems integriertbar ist, kann diese Funktion vorteilhaft im Zuge des normalen Kommunikationsbetriebs im Netz genutzt werden. Gleichwohl kann sie auch angestoßen werden, wenn aufgrund der Betriebsbedingungen des Systems festgestellt wird, daß dessen Busnetz momentan nicht ausgelastet ist. Es kann dann jedenfalls nicht zu Störungen oder zur Verlangsamung des Datendurchsatzes im laufenden Betrieb des Busnetzes kommen.

Gemäß **Anspruch 12** kann die Diskrimination oder Prüfung oder Messung des wenigstens einen rezessiven oder dominanten Signalpegels durch datensignalverkettetes Sampeln des Potentials auf dem wenigstens einen Busdraht binnen einer Abtastdauer erfolgen, welche kürzer als eine Busbitzeit der Datensignale ist, d.h. zeitlich sinngemäß zur Erfassung dominanter Signalpegel gemäß **[2]**, dort Figen. 25 und 26 bzw. gemäß **[3]**, dort Figen. 40 und 41.

Beispielsweise wird so das in der Praxis nie vollständig unterdrückbare Überschwingen des Datensignals nach Pegelzustandsübergängen auf dem wenigstens einen Busdraht von der Diskrimination, Prüfung oder Messung ausgeblendet, wodurch Fehlbewertungen ausgeschlossen sind.

In vorteilhafter Weise können so Bezugspotentialverschiebungen im Zuge normalen Systembetriebs erfaßt werden, wobei im Rahen der Software zum Betreiben des vernetzten Systems jeweils wenigstens einem anderen Teilnehmer die Rolle eines "Meßzeugen" bezüglich der Verifikation des bei Lastwechseln ermittelbaren Versatzes des wenigstens einen rezessiven Signalpegels zugeordnet werden kann.

Gemäß **Anspruch 13** kann eine (allmähliche) Verschiebung des Bezugspotentials bei wenigstens einem Teilnehmer in dessen Empfangsbetrieb erfaßt werden, indem in diesem Teilnehmer eine Diskrimination oder Messung wenigstens eines auf wenigstens eine Leitung des Busnetzes eingespeisten dominanten Quellenpegels erfolgt, wobei der jeweils eingespeiste dominante Quellenpegel gegenüber dem normalen dominanten Signalpegel in jeweils vorbestimmter Weise versetzt wird und in der Zustands-Map in Abhängigkeit von dem im empfangenden Teilnehmer gewonnenen Diskriminations- oder Meßergebnis der jeweilige Versatz in Form von Zustands-Daten abgelegt wird.

Bei dieser Fortbildung können z.B. von Empfängerteilen der Teilnehmer im System mitumfaßte Pegeldiskriminatoren vorteilhaft genutzt werden. Die Diskrimination oder Messung kann sich so z.B. auf eine Überprüfung reduzieren, bei welchem Versatz des wenigstens einen dominanten Quellenpegels einzelne Teilnehmer keine Daten mehr empfangen bzw. Daten wieder empfangen können. Dementsprechend verkörpern in der Zustands-Map abgelegte Daten den einzelnen empfangenden Teilnehmern zugeordnete Versatzwerte besagten wenigstens einen dominanten Pegels. Durch dieses Verfahren können also die Daten empfangenden Teilnehmer hinsichtlich der Lage ihres Bezugspotentiales relativ zur Lage des Bezugspotentiales des jeweils Daten aussendenden Teilnehmers überprüft werden. Indem das Bezugspotential des Daten aussendenden Teilnehmers kontinuierlich oder in Schritten variiert wird, bis gerade keine Daten mehr empfangen oder bis Daten gerade wieder empfangen werden können, kann unter Berücksichtigung der zulässigen Toleranz des dominanten Signalpegels im Busnetz (welche unter der Annahme festgelegt wurde, daß Versätze des Bezugspotentials bei einzelnen Teilnehmern nicht vorliegen) festgestellt werden, inwieweit das Bezugspotential eines empfangenden Teilnehmers verschoben ist, und zwar unter allen Betriebsbedingungen bei Empfang, also sowohl in Ruhe als auch unter Betriebs- oder Testlastbedingungen.

Gemäß **Anspruch 14** kann eine (allmähliche) Verschiebung des Bezugspotentials bei wenigstens einem Teilnehmer in dessen Sendebetrieb erfaßt werden, indem eine Diskrimination oder Messung wenigstens eines auf wenigstens eine Leitung des Busnetzes von diesem Teilnehmer eingespeisten dominanten Signalpegels erfolgt, indem bei oder in wenigstens einem empfangenden Teilnehmer ein empfangsdiskriminanter Bezugspegel in jeweils vorbestimmter Weise versetzt wird und in der Zustands-Map in Abhängigkeit von dem im empfangenden Teilnehmer gewonnenen Diskriminations- oder Meßergebnis der jeweilige Versatz in Form von Zustands-Daten abgelegt wird.

Auch bei dieser Fortbildung können von Teilnehmern mitumfaßte Pegeldiskriminatoren vorteilhaft genutzt werden. Die Diskrimination oder Messung kann sich so z.B. auf eine Überprüfung reduzieren, bei welchem Versatz ihres empfangsdiskriminanten Bezugspegels einzelne Teilnehmer noch Daten empfangen können. Dementsprechend verkörpern in der Zustands-Map abgelegte Daten dem sendenden Teilnehmer zugeordnete Versatzwerte besagten wenigstens einen empfangsdiskriminanten Bezugspegels.

Gemäß **Anspruch 15** wird eine Diskrimination oder Prüfung oder Messung bzw. Überprüfung bezüglich eines bestimmten Teilnehmers jeweils durch wenigstens zwei andere Teilnehmer im Netz vorgenommen (Witness-Funktion).

Im Rahmen der Software zum Betreiben des vernetzten Systems wird hierbei wenigstens einem anderen Teilnehmer die Rolle eines "Meßzeugen" zur Verifikation eines ermittelten Signalkriteriums bzw. Potentialversatzes eines einzelnen Teilnehmers zugeordnet. Durch diese Maßnahme können Diskriminations-, Prüf- und Meßfehler insbesondere durch Einflüsse seitens des Systemträgers verringert und die Erfassung statistisch auftretender Fehler geschärft werden.

Gemäß **Anspruch 16** wird eine Diskrimination oder Prüfung oder Messung bzw. Überprüfung bezüglich eines bestimmten Teilnehmers identisch auch bezüglich wenigstens eines weiteren Vergleichsteilnehmers vorgenommen und eine Plausibilitätsauswahl in der Zustands-Map bezüglich des Ergebnisses getroffen.

Dabei kann die identische Vergleichsmessung z.B. alternativ, alternierend oder im Sinne eines Master-SlaveAbwicklung vorgenommen werden. Im Rahmen der Software zum Betreiben des vernetzten Systems wird hierbei der Zustands-Map die Rolle eines "Akzeptators" bzw. "Billigers" bezüglich einer plausiblen Auswahl aus mehreren Diskriminations-, Prüfungs-, Mess- oder Überprüfungsergebnisse zugeordnet.

Indem z.B. die Diskrimination oder Messung durch unterschiedliche empfangende Teilnehmer erfolgt, kann auf der Basis zeugen- bzw. akzeptatorgestützter Plausibilitätsbestätigung ausgewertet werden, ob die Veränderung eines Signalkriteriums, beispielsweise eine Verschiebung eines Bezugspotentiales, beim Daten empfangenden Teilnehmern oder beim Daten sendenden Teilnehmers verursacht ist. Wird z.B. von mehreren Daten empfangenden Teilnehmern eine Bezugspotentialverschiebung festgestellt, kann unter bestimmten Voraussetzungen geschlossen werden, daß die ermittelte Potentialverschiebung eher beim Daten sendenden Teilnehmer vorliegt. Indem Daten betreffend die relative Lage mehrerer Daten empfangender Teilnehmer ausgetauscht werden, kann so auch besonders einfach erkannt und ausgewertet werden, wo in der Netztopologie eine Störung ursächlich vorliegt.

Bei der Fortbildung gemäß **Anspruch 17** des Verfahrens nach Anspruch 13 werden Datensignale mit wenigstens einem gegenüber dem normalen dominanten Pegel versetzten dominanten Quellenpegel von wenigstens einem Teilnehmer des vernetzten Systems ins Busnetz gesendet.

Indem bei dieser Fortbildung des Verfahrens z.B. nur ein Teilnehmer zur Generation von versetzten dominanten Quellenpegel ausgestattet zu sein braucht kann auch hiermit eine vorteilhafte Minimierung des Hardwareaufwandes erreicht werden.

Gemäß **Anspruch 18** können von Empfängerteilen der Teilnehmer im System mitumfaßte Pegeldiskriminatoren genutzt werden, so daß kein Aufwand für besondere Pegeldiskriminatoren oder z.B. A/D-Wandlungsmittel getrieben werden muß. Dies dienst einer Minimierung des Hardwareaufwands.

Gemäß **Anspruch 19** erfolgt die Diskrimination oder Prüfung bzw. Überprüfung oder Messung unter netzweit definierten Ruhe- und/oder Betriebs- oder Testlastbedingungen einzelner Teilnehmer.

Werden Verbraucher mit Strömen versorgende Teilnehmer Ruhe- und Laststrom- oder Testlastbedingungen unterworfen, kann durch Auswertung der in der Map abgelegten Zustands-Daten vorteilhaft auf einfache Weise das Ausmaß erkannt werden, in dem einzelne Teilnehmer sich in einem versorgungsabhängig kritischen Zustand hinsichtlich ihrer sicheren Kommunikationsfähigkeit befinden.

Gemäß **Anspruch 20** wird die Zustands-Map in wenigstens einem dem vernetzten System dauerhaft zugehörigen Teilnehmer betrieben. Dadurch sind vorteilhaft die den Systemzustand hinsichtlich der geprüften Teilnehmer bezüglich des wenigstens einen Kriteriums charakterisierenden Zustands-Daten im System jederzeit verfügbar. Andererseits kann so die Diskrimination oder Prüfung bzw. Überprüfung oder Messung während des Betriebes des vernetzten Systems z.B. auch zyklisch erfolgen.

Gemäß **Anspruch 21** wird die Zustands-Map nichtflüchtig gespeichert. Vorteilhafterweise sind dadurch sämtliche Daten in der Zustands-Map bei Stromausfall oder Außerbetriebsetzung des Systems bzw. Systemträgers vor Verlust geschützt. Außerdem kann so auf die Zustands-Daten jederzeit - beispielsweise in bestimmten Ereignisabständen - zugegriffen werden.

Gemäß **Anspruch 22** wird die Zustands-Map fortlaufend aktualisiert, wobei ältere Inhaltsteile durch neuere Inhaltsteile überschrieben werden. Dadurch wird vorteilhaft sichergestellt, daß die Zustands-Map immer aktuellste Zustands-Daten bereithält.

Gemäß **Anspruch 23** werden (die) wenigstens einen früheren Systemzustand charakterisierende Zustands-Daten zumindest vorübergehend zusammen mit (den) den aktuellen Systemzustand charakterisierenden Zustands-Daten in der Zustands-Map gehalten. In vorteilhafter Weise sind durch diese Maßnahme ereignisabhängige Auswertungen möglich, die auf die Fehlerabstandsvorgeschichte zurückgreifen. Beispielsweise die Bewertung nur gelegentlich bzw. statistisch zeitverteilt auftretender Beeinträchtigungen wird so möglich.

Gemäß **Anspruch 24** wird aus in der Zustands-Map wenigstens vorübergehend vorhandenen, den aktuellen und wenigstens einen früheren Systemzustand charakterisierenden Zustands-Daten wenigstens eine Trendgröße bezüglich der tendenziellen Entwicklung einer Abweichung bzw. eines Fehlerabstandsmaßes des wenigstens einen Signalkriteriums im System abgeleitet. Vorteilhaft gibt die wenigstens eine Trendgröße ein unmittelbares Maß für den Grad der Dringlichkeit einer vorauseilenden Maßnahme zwecks Sicherung der Verfügbarkeit des Systems. Abgesehen davon ermöglicht diese Fortbildung des Verfahrens eine Beurteilung der Netzgüte des Systems über der Zeit sowohl bezüglich entsprechender Einzelkriterien als auch insgesamt.

Gemäß **Anspruch 25** wird die Ableitung der Trendgröße vermittels der Software zum Betreiben des vernetzten Systems vorgenommen. Daraus ergibt sich der Vorteil, daß die Trendgröße in besonders einfacher Weise auch extern der Zustands-Map beispielsweise in einem Teilnehmer des vernetzten Systems ermittelt und der Netzkommunikation unterlagert in die Zustands-Maß transferriert werden kann.

Gemäß **Anspruch 26** wird/werden die Abweichung bzw. das Fehlerabstandsmaß und/oder die wenigstens eine Trendgröße in der Zustands-Map nichtflüchtig gehalten. Durch diese Maßnahme kann vorteilhaft z.B. nach einem erfolgten Systemausfall dessen Ursache noch rekonstruiert werden. Andererseits kann so nach einem Teilnehmeroder Systemausfall einfach und sicher Aufschluß zwecks schneller Wiederinstandsetzung des Systems gefunden werden. Die ständige Abrufbarkeit solcher Trenddaten ermöglicht auch auf kostengünstige Weise einfache und aussagekräftige Anzeigen von kritischen kommunikativen Betriebsbedingungen einzelner Teilnehmer des Systems direkt am Systemträger.

Gemäß **Anspruch 27** wird die Diskrimination oder Prüfung bzw. Überprüfung oder Messung und wenigstens eines von Sammlung, Aufbereitung, Anordnung und Auswertung von Zustands-Daten in der Zustands-Map durch ein mit der bzw. in die Software zum Betreiben des vernetzten Systems integriertes und hinsichtlich seiner Durchführung dem normalen Netzbetrieb unterlagertes und insoweit latent ablaufendes Online-Diagnoseprogramm vorgenommen.

Indem insoweit wenigstens ein Teil der Pflege und/oder Verwaltung der Zustands-Map in die Software zum Betreiben des vernetzten Systems integriert ist, können Diskriminationen, Prüfungen bzw. Überprüfungen oder Messungen z.B. vorteilhaft so oft angestoßen werden, wie es die momentanen Kommunikationsanforderungen bis zur Auslastung des Busnetzes zulassen. Dadurch werden einerseits Störungen oder Verlangsamungen des Datendurchsatzes im laufenden Betrieb des Busnetzes ausgeschlossen und andererseits ein hoher Aktualitätsgrad von aus der Zustands-Map verfügbaren Zustands-Daten sichergestellt, indem Schwachlastphasen der Kommunikation im Netz für Update und Pflege der Zustands-Map vorteilhaft ausgenutzt werden können.

Gemäß **Anspruch 28** wird an das vernetzte System als weiterer Teilnehmer ein Prüfgerät angeschlossen und es werden von diesem wenigstens Teile der Zustands-Map ausgelesen. Dadurch werden in vorteilhafter Weise routinemäßige Überprüfungen anläßlich Inspektionen des Systemträgers mit besonders einfachen und einfach zu handhabenden Prüfgeräten ausführbar. Zum einen können dadurch aus den den Systemzustand hinsichtlich der geprüften Teilnehmer bezüglich des wenigstens einen Kriteriums charakterisierenden Daten auch außerhalb des vernetzten Systems entsprechende Trenddaten aufbereitet werden. Zum anderen kann dadurch vorteilhaft bei routinemäßigen Inspektionen des Systemträgers einfach erkannt werden, wenn sich die kommunikativen Betriebsbedingungen eines Teilnehmers kritisch verschlechtern bzw. verschlechtert haben und nach Prävention verlangen.

Gemäß **Anspruch 29** ist wenigstens ein dem System dauerhaft zugehöriger Teilnehmer mit Anzeige- und/oder Signaleinrichtungen ausgestattet und es wird bei Überschreitung eines oberen Grenzwertes für das Maß der Abweichung oder die Trendgröße bzw. bei Unterschreitung eines unteren Grenzwertes für das wenigstens eine Fehlerabstandsmaß dieser Zustand von dem Teilnehmer angezeigt bzw. signalisiert. Durch diese Maßnahme kann z.B. ein Nutzer des Systemträgers noch während dessen laufenden Betriebs schadlos auf ein Inspektionserfordernis hingewiesen werden.

Gemäß **Anspruch 30** werden/wird Teile der in der Zustands-Map abgelegten Zustands-Daten und/oder das Maß der Abweichung bzw. ein Fehlerabstandsmaß des Systems oder eines Teilnehmers und/oder die wenigstens eine Trendgröße in ein elektronisches Autorisierungsmittel zur Benutzung bzw. zur Inbetriebnahme des Systemträgers eingeschrieben. Gemäß dieser Fortbildung können in vorteilhafter Weise entsprechende Daten z.B. in einen elektronischen "Berechtigungsschlüssel" eines Systemträgers bei dessen Inbetriebnahme oder vor dessen Außerbetriebsetzung ein- bzw. zurückgeschrieben werden. Dies eröffnet neuartige Sicherheitsfunktionen und kann zudem die Rationalisierung des Inspektionsbetriebes für entsprechend ausgestattete Systemträger unterstützen.

Gemäß **Anspruch 31** wird bei der Inbetriebnahme und Initialisierung des vernetzten Systems sofort eine erste Diskrimination oder Prüfung oder Messung vorgenommen, wobei selektiv eine geringere Zahl von Teilnehmern und/oder eine geringere Zahl von Signalkriterien der Diskrimination oder Prüfung oder Messung unterworfen wird bzw. werden als bei der anschließenden Weiterführung des Verfahrens. Durch diese Maßnahme kann beispielsweise sofort nach der Initialisierung die Kommunikations- und Betriebsfähigkeit eines eine Zustands-Map tragenden Teilnehmers besonders zeitsparend geprüft werden.

Gemäß **Anspruch 32** werden wenigstens zwei Zustands-Maps in zwei verschiedenen Teilnehmern des Systems vorgesehen und verwendet. Durch diese Maßnahme kann u.a. eine hohe Sicherheit gegen Informationsverlust erreicht werden.

Gemäß **Anspruch 33** werden im System zwei verschiedene Zustands-Maps vorgesehen, welche für unterschiedliche Prüfverfahren und/oder -programme jeweils voneinander unabhängig verändert und/oder bearbeitet und/oder ausgelesen werden. Durch diese Maßnahme ist es z.B. möglich, die Verfügbarkeit bestimmter Teilnehmer gesondert zu sichern und bestimmte Zustands-Daten vor unbefugtem Zugriff zu schützen.

Gemäß **Anspruch 34** versorgen im Zuge der Diskrimination oder Prüfung bzw. Überprüfung oder Messung wenigstens einzelne Teilnehmer jeweils wenigstens einen teilnehmerexternen elektrischen Verbraucher mit Betriebsstrom. Durch diese Maßnahme können Potentialfehler oder systemintern verursachte EMV-Störungen von einzelnen Teilnehmern besonders wirkungsvoll erkannt und geortet werden.

Gemäß Anspruch 35 ist wenigstens in einzelnen Teilnehmern des Systems eine über das Busnetz im Sinne einer Bestromung ansteuerbare Prüflast vorgesehen und es wird im Zuge der Diskrimination oder Prüfung bzw. Überprüfung oder Messung dieselbe angesteuert. Durch diese Maßnahme können Potentialfehler oder teilnehmereigenverursachte EMV-Störungen besonders wirkungsvoll erkannt werden. Des weiteren kann mittels dieser Maßnahme z.B. die Überlasttragfähigkeit der Stromversorgungsanschlüsse oder der entsprechenden Versorgungsleitungen einzelner Teilnehmer geprüft werden.

Werden Teilnehmer mit interner Prüflast z.B. abwechselnd oder alternierend unterschiedlichen Ruhe- und Laststromoder Testlastbedingungen unterworfen, kann bei Kenntnis der Netztopologie des Systems beispielsweise anhand von Bezugspotentialverschiebungen verschiedener Teilnehmer bzw. von durch koppelnde und/oder elektromagnetischen Signalbeeinträchtigungen bei verschiedenen Teilnehmern durch Auswertung entsprechender Zustands-Daten aus der wenigstens einen Zustands-Map BESONDERS GUT auf den Ort (der Entstehung) eines das System zwar beeinflussenden, ursächlich aber systemfremden Fehlers am Systemträger geschlossen werden.

Gemäß **Anspruch 36** wird auch die innerhalb von Teilnehmern erfaßbare, außen anliegende Betriebsspannung oder eine daraus abgeteilte Spannung diskriminiert oder geprüft bzw. überprüft oder gemessen und es werden diesbezüglich Zustands-Daten erzeugt und in der wenigstens einen Zustands-Map abgelegt und/oder verarbeitet und/oder ausgewertet. Auch durch diese Maßnahme können Potentialfehler oder systemintern verursachte EMV-Störungen von einzelnen Teilnehmern wirkungsvoll erkannt bzw. geortet werden. Des weiteren kann mittels dieser Maßnahme z.B. die Überlasttragfähigkeit der Stromversorgungsanschlüsse oder der entsprechenden Versorgungsleitungen einzelner Teilnehmer geprüft werden.

Gemäß **Anspruch 37** weist wenigstens eine Zustands-Map einen Teilnehmer-Identifikationsabschnitt, ein Zustands-Daten-Stack und einen Datenbearbeitungsabschnitt auf.

Gemäß **Anspruch 38** umfa0t der Identifikationsabschnitt eine Tabelle, über die jedem System-Identifier und/oder Teilnehmer im System bedarfsweise seine topologische Identifikation bzw. ein topologischer Identifier innerhalb des Netzes zugeordnet wird.

Gemäß **Anspruch 39** umfaßt das Datenstack eine der Anzahl zu prüfender Signalkriterien entsprechende Mehrzahl von Registerstacks, in welchen bzw. durch welche hindurch Zustands-Daten entsprechend ihrem Altersfortschritt geroutet werden. Gemäß **Anspruch 40** weist der Datenbearbeitungsabschnitt wenigstens einen Bereich zur Datenselektion und einen Bereich zur Datenbearbeitung auf, wobei in ersterem Zustands-Daten wenigstens nach Minimal- und Maximalwerten selektiert und/oder umgeordnet und wobei in letzterem aus Zustands-Daten in Abhängigkeit von ihrem Alter und/ oder zeitlichen Anfall veränderungsindikative Daten erzeugt werden.

Vorteile der vier letztgenannten verfahrensgemäßen Fortbildungen werden in der Figurenbeschreibung aufgezeigt.

Gemäß **Anspruch 41** wird das Verfahren bei einem Verkehrsmittel durchgeführt. Dadurch wird eine hohe Verfügbarkeit und Sicherheit vor systemausfallbedingten Unfällen erreicht.

In der Zeichnung sind zunächst einige Hardwaredetails veranschaulicht, die Teilnehmer beispielhaft aufweisen können, um die Durchführung bestimmter Verfahrensschritte zu ermöglichen. Ohne daß diese Darstellung Anspruch auf Vollständigkeit erhebt und irgend eine Einschränkung der Erfindung bedeutet, ist hier der beispielhafte Fall einer Bezugspotentialprüfung getroffen. Im Rahmen der Erfindung können Teilnehmer hierfür sowie zur Prüfung nichtpotentialgebundener Signalkriterien gleichwohl auch ganz andere Mittel bereitstellen (Die gezeigten Hardwaredetails sind z.T. **[2]** entnommen, weshalb deren Beschreibung kurz gehalten ist. Wegen weiterer Details wird auf **[2]** und unter Schaltkreisaspekt auf **[1], [3]** und **[4]** verwiesen). Daran schließen sich Figuren zur Verdeutlichung bestimmter Verfahrensdetails an, welche daran anschließend beschrieben werden. Es zeigen:
- **Fig. 1**: eine schematische Illustration eines vernetzten Systems mit verschiedenen Teilnehmern an einem Zweidraht-Bus;
- **Fig. 2**: eine blockschematische Veranschaulichung eines Simulationsmoduls in Verbindung mit einem zweidrahtbusfähigen Teilnehmer (analog zu [2] dort Fig. 1);
- **Fig. 3**: eine Wirkblockdarstellung von Elementen eines Transceivers eines Teilnehmers (analog zu [2] dort Fig. 37);
- **Fig. 4**: eine Wirkblockdarstellung von Elementen eines Empfangsteils eines Transceivers eines Teilnehmers (analog zu [2] dort Fig. 34);
- **Fig. 5**: eine Wirkblockdarstellung von Elementen eines Empfangsteils eines Transceivers eines Teilnehmers (analog zu [2] dort Fig. 36);
- **Fig. 6**: eine weitere Wirkblockdarstellung von Elementen eines Empfangsteils eines Transceivers eines Teilnehmers (analog zu [2] dort Fig. 35);
- **Fig. 7**: eine Wirkblockdarstellung von Vorrichtungselementen eines Sendeteils eines Transceivers eines Teilnehmers (analog zu [2] dort Fig. 15);
- **Fig. 8**: ein Funktionsschaltbild einer Vorrichtung, welche die sendeseitige Tastung der Busader BUS L an ein dominant einzuprägendens Tastpotential erlaubt (analog zu [2] dort Fig. 25);
- **Fig. 9**: eine graphische Veranschaulichung der Empfangsfähigkeit eines Busteilnehmers über einer rampenförmigen Potentialverschiebung im Zuge einer beispielhaften Durchführung des Verfahrens (analog zu [2] dort Fig. 7);
- **Fig. 10**: eine schematische Illustration der beispielhaften Struktur einer Zustands-Map;
- **Fig. 11**: ein Flußdiagramm zur Durchführung des Verfahrens gemäß einem ersten Ausführungsbeispiel;
- **Fig. 12a**: eine Veranschaulichung des Fensters fehlerfreier Datenübertragung, wenn ein sendender Teilnehmer zwecks Prüfung eines empfangenden Teilnehmers einen Sendespannungspegel ändert;
- **Fig. 12b**: den Verlauf eines Spannungspegels eines sendenden Teilnehmers bei Potentialprüfung der Empfangsfähigkeit eines anderen Teilnehmers;
- **Fig. 13**: ein Diagramm zur Veranschaulichung des Verfahrensablaufs zur Abspeicherung in der Zustands-Map einer Verschiebung des "Empfangsfensters" gemäß Figen. 12a und 12b;
- **Fig. 14a**: eine Veranschaulichung des Fensters fehlerfreier Datenübertragung, wenn ein empfangender Teilnehmer zwecks Prüfung eines sendenden Teilnehmers einen diskriminanten Bezugsspannungspegel ändert;
- **Fig. 14b**: den Verlauf eines diskriminanten Bezugsspannungspegels eines empfangenden Teilnehmers bei Potentialprüfung der Sendefähigkeit eines anderen Teilnehmers;
- **Fig. 15**: ein Diagramm zur Veranschaulichung des Verfahrensablaufs zur Abspeicherung in der Zustands-Map einer Verschiebung des "Sendefensters" gemäß Figen. 14a und 14b;
- **Fig. 16**: ein Blockschaltbild eines Systemteilnehmers, welcher Mittel zur kontrollierbaren Bestromung seines masseseitigen Betriebsstromanschlusses beinhaltet.

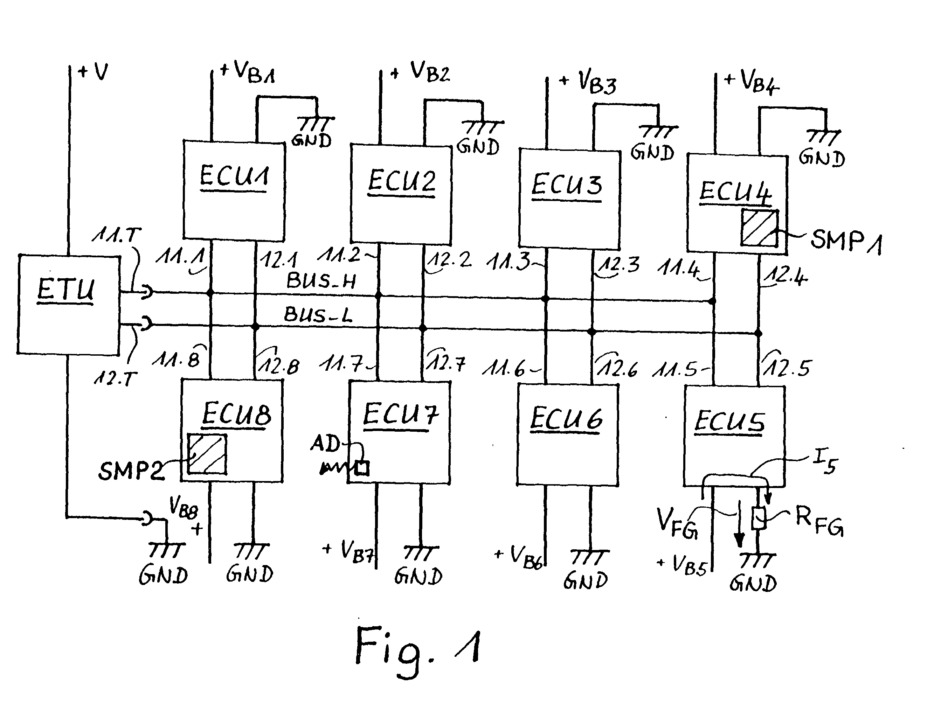

**Fig. 1** veranschaulicht schematisch vereinfacht ein vernetztes System, zu dessen Prüfung und Sicherung seiner Verfügbarkeit das erfindungsgemäße Verfahren dient. Beispielhaft über einen Zweidrahtbus mit Busleitungen BUS_H und BUS_L sind acht Teilnehmer ECU1 bis ECU8 über je zwei Anschlüsse 11.1 und 12.1 bis 11.8 und 12.8 kommunikativ miteinander vernetzt. Die Teilnehmer ECU1 bis ECU8 werden aus beipielhaft positiven Versorgungspotentialen V_{B1} bis V_{B8} gegenüber einer gemeinsamen Äquipotentialschiene GND mit Betriebsspannung und -strom versorgt. Des weiteren ist ein mit entsprechenden Anschlüssen 11.T und 12.T z.B. nur vorübergehend an die Busleitungen BUS_H und BUS_L angeschlossenes Prüfgerät ETU dargestellt, welches von einem besonderen positiven Potential V_{TU} gegen die gemeinsame Äquipotentialschiene GND des vernetzten Systems mit Betriebsstrom versorgt wird. Insoweit ist das gezeigte System vorübergehend auf neun Teilnehmer erweitert, indem das Prüfgerät über den Bus BUS_H/BUS_L mit den übrigen Teilnehmern ECU1 bis ECU8 normalerweise kommunizieren kann.

Die Kommunikation zwischen den Teilnehmern ECU1 bis ECU8 kann aus vielerlei Gründen beeinträchtigt oder gefährdet sein, wobei im normalen Betrieb bzw. gar bei der Systeminitialisierung schon erkennbare bzw.sofort auffallende Fehler wie z.B. Kurzschlüsse oder Unterbrechungen im Busnetz hier nicht interessieren. Beispielsweise können Signalpegel unzulässig verschoben oder Flanken unzulässig verformt sein, was verstärktes Überschwingen bzw. gestörte oder zu kurze Bitsignalschultern zur Folge hat, oder es können bei Teilnehmern verursachte Bezugspotentialfehler vorliegen, die indirekt zu Signalpegelverschiebungen für betroffene Teilnehmer und deren Kommunikation mit den übrigen Teilnehmern führen. Durch entsprechende Ausrüstung der Teilnehmer sind derlei Veränderungen der bzw. Abweichungen von normalen Signalkriterien diskriminierbar, prüfbar oder meßbar.

Aus der Fülle möglicher und im Rahmen des erfindungsgemäßen Verfahrens vorausschauend prüfbarer Signalkriterien werden nachfolgend beispielhaft und stellvertretend Bezugspotentialfehler behandelt, was insoweit jedoch keinerlei Beschränkung der Erfindung bedeutet.

Bei den Versorgungspotentialen V_{B1} bis V_{B8} kann es sich um voneinander unabhängige Potentiale oder auch wenigstens teilweise (annähernd) gleiche Potentiale handeln. Der Teilnehmer ECU7 weist beispielhaft ein Signalisierungselement AD auf, im einfachsten Falle z.B. eine Warnlampe oder einen Tongeber. Vorliegend beinhalten gleich zwei Teilnehmer eine Zustands-Map im Sinne der Erfindung, nämlich der Teilnehmer ECU4 eine erste und der Teilnehmer ECU8 eine zweite Zustands-Map SMP1 bzw. SMP2. Im Rahmen der Erfindung können mittels der Zustands-Map SMP1 z.B. bestimmte erste Signalkriterien und mittels der Zustands-Map SMP2 bestimmte zweite Signalkriterien erfaßt bzw. gespeichert werden. Gleichwohl kann im Rahmen der Erfindung die Zustands-Map SMP2 auch ein Sicherheits-Duplikat der Zustands-Map SMP1 sein bzw. vice versa, oder es können verschiedene Prüfprogramme verschiedene Zustand-Maps nutzen bzw. für diese vorgesehen sein.

In **Fig. 1** sind der Übersicht halber die über die Teilnehmer ECU1 bis ECU8 aus den Potentialen V_{B1} bis V_{B8} mit Betriebsstrom versorgten Verbraucher figürlich nicht angedeutet; sie können hier als Bestandteile von ECU1 bis ECU8 aufgefaßt werden. Unter Vernachlässigung von geringen, unvermeidbaren Verlustströmen über den Bus bzw. dessen Bürdebeschaltung (vgl. **[1]** bis **[4]**) kann also näherungsweise angenommen werden, daß die aus Potentialen V_{B1} bis V_{B8} bezogenen Betriebsströme zur gemeinsamen Äquipotentialschiene GND abfließen, so wie dies beispielhaft nur für den Teilnehmer ECU5 anhand des Stromes I₅ veranschaulicht ist. Beim Teilnehmer ECU5 ist eine Besonderheit angedeutet, nämlich eine schlechte Masseverbindung mit der Äquipotentialschiene GND des Systems, die einen Widerstand R_{FG} bedigt und daran folglich einen Fehlspannungsabfall V_{FG} = (I₅ ^{*} R_{FG}). Dieser Fehlspannungsabfall bedingt, daß der Masseanschluß des Teilnehmers ECU5 um den Betrag der Fu0punktfehlerspannung V_{FG} über der Äquipotentialfläche GND "floatet", d.h. keinen Bezug mehr zum systemweit genutzten Bezugspotential hat. Schwankungen des Stromes I₅ und/oder des Widerstandes R_{FG} haben ein entsprechendes Auf- und Abfloaten des Teilnehmers ECU5 über GND zur Folge. Dies kann, wie nachfolgend näher erläutert, eine signalpegelbedingte Kommunikationsunfähigkeit des Teilnehmers ECU5 mit anderen Teilnehmern bzw. dem Rest des Systems zur Folge haben, auch wenn sonst alle übrigen Signalkriterien gut erfüllt sind (z.B.Anstiegszeit, Überschwingen, Bitschulterbreite, etc.).

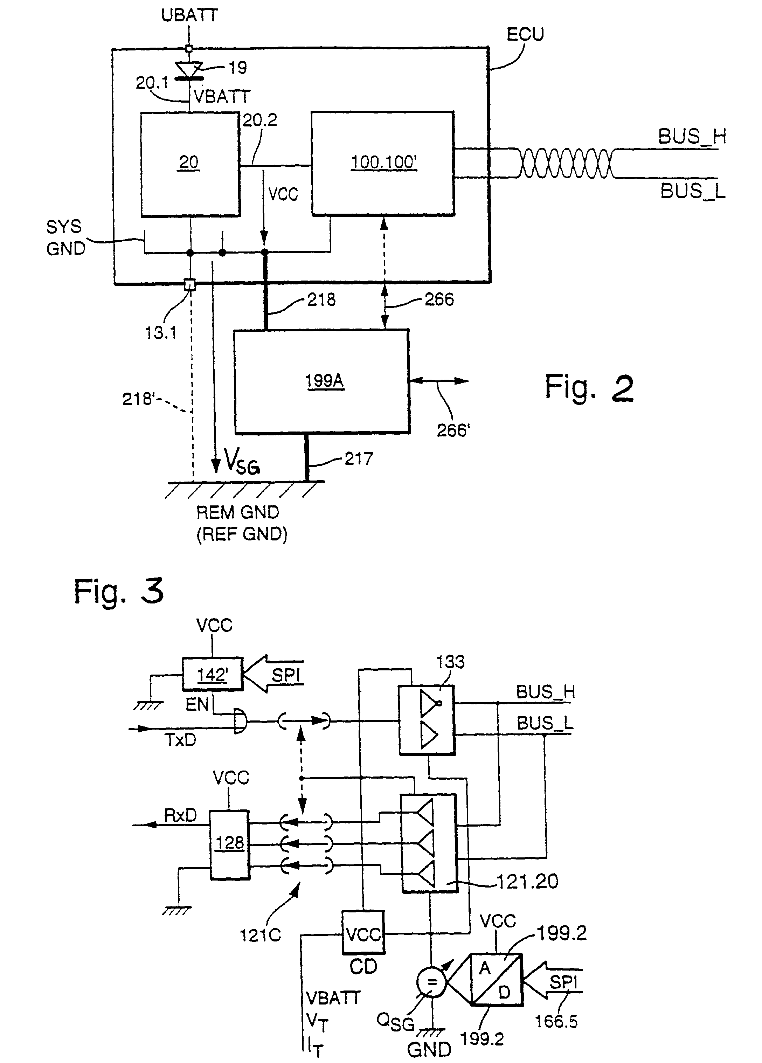

In **Fig. 2** ist zur Messung - durch Kompensation - einer solchen Massefußpunktfehlerspannung V_{FG} eines Bus-Teilnehmers ein Simulationsmodul 199A im normalen (gestrichelten) Massebetriebsstrompfad 218' eines anderen Busteilnehmers ECU geschaltet, wobei dieser normale Pfad hier beispielhaft zwischen einer teilnehmerinternen Masseschiene SYStem GrouND (SYS GND) - an eine Anschlußklemme 13.1 des Teilnehmers ECU geführt - und einem Speisemassepunkt REMote bzw. REFerence GrouND (REF bzw. REM GND) im Applikationsumfeld verläuft.

Der Versorgungsstromkreis des Teilnehmers ECU schließt sich massewärts von der teilnehmerinternen Masseschiene SYS GND über die fett hervorgehobenen Verbindungen 217 und 218 und das Simulationsmodul 199A.

Dem Busteilnehmer ECU wird von einer nicht dargestellten Versorgungsschiene die Betriebsspannung UBATT zugeführt. Ggfs. um einen geringen Spannungsabfall an einem Verpolschutzelement 19 auf VBATT reduziert speist sie den Eingang 20.1 eines Spannungsreglers 20, dessen Fußpunkt mit der vorgenannten Masseschiene SYS GND verbunden ist. Mit letzterer ist auch der masseseitige Versorgungsanschluß des Bus-Transceivers 100, 100' verbunden, welchem zwecks Stromversorgung von einem Ausgang 20.2 des Reglers 20 eine stabilsierte Versorgungsspannung VCC von z.B. 5 Volt zuführbar ist. Mit der teilnehmerinternen Masseschiene SYS GND sind auch alle übrigen elektrischen Komponenten im Teilnehmer ECU verbunden.

Der Bus-Transceiver 100, 100' ist mit einem Zweidraht-Bus BUS_H/BUS_L verbunden, über den der Busteilnehmer ECU mit entsprechenden anderen Busteilnehmern kommunizieren kann. Er kann für Zwei- und Eindraht-Empfang ausgestattet sein, wobei im differentiellen Zweidrahtbetrieb drahtbezogen ein anderer Ansprechpegel als bei Empfang nur vom jeweils betrachteten Draht wirksam sein kann. Zwischen dem Busteilnehmer ECU und dem Simulationsmodul 199A ist eine Verbindung 266 vorgesehen. Sie kann gleichwohl auch zwischen dem Bus-Transceiver 100, 100' und dem Simulationsmodul 199A bestehen. Für den Fall, daß das Simulationsmodul 199A Bestandteil z.B. eines mobilen Testgerätes - also etwa ETU in **Fig. 1 -** ist, kann auch eine Steuerverbindung 266' z.B. mit einem hier nicht gezeigten Computer o.dgl. vorgesehen sein. Ersichtlich ersetzt hier also das Simulationsmodul 199A den fehlerhaften Massewiderstand R_{FG} in **Fig. 1,** welcher dort eine die Kommunikation beeinträchtigende Fußpunktfehlerspannung VFG des Teilnehmers ECU 5 bewirkt. Die Auswirkung dieser Fehlerspannung im Hinblick auf die Empfangsfähigkeit des Teilnehmers ECU5 erlaubt das Simulationsmodul 199A gemäß Fig. 2 zu kompensieren, ohne daß dazu im Teilnehmer ECU5 die Empfangsschwellen verändert werden müssen.

In **Fig. 3** ist beispielhaft eine z.B. für Massepotentialfehleranalysen geeignete Ausbildung von Vorrichtungselementen im Bus-Transceiver eines Teilnehmers ersichtlich, bei der die Versorgungsanschlüsse sowohl des analog wirkenden Diskriminationsteils 121.20 des Empfangsteils als auch der Sendeendstufe 133 des Bus-Transceivers aus einund der/demselben Spannungsklammer bzw. Spannungsregler CD versorgt werden und insoweit zusammen mittels einer digital ansteuerbaren Fußpunkt-Offset-Quelle Q_{SG} in entsprechender Weise über ein Masse-Potential GND anhebbar sind. Sowohl sende- als auch empfangsseitig eine flexible Potentialanbindung der Digitalsignale TxD und DH, DD und DL leistende Strompfade sind ebenfalls angedeutet, ebenso ein Speicher 142' zur Ermöglichung der Sperrung der Endstufe 133 (kein Buszugriff). Ersichtlich ist eine solche Ausbildung für Potentialfehlerprüfungen von empfangenden und sendenden Teilnehmern geeignet.

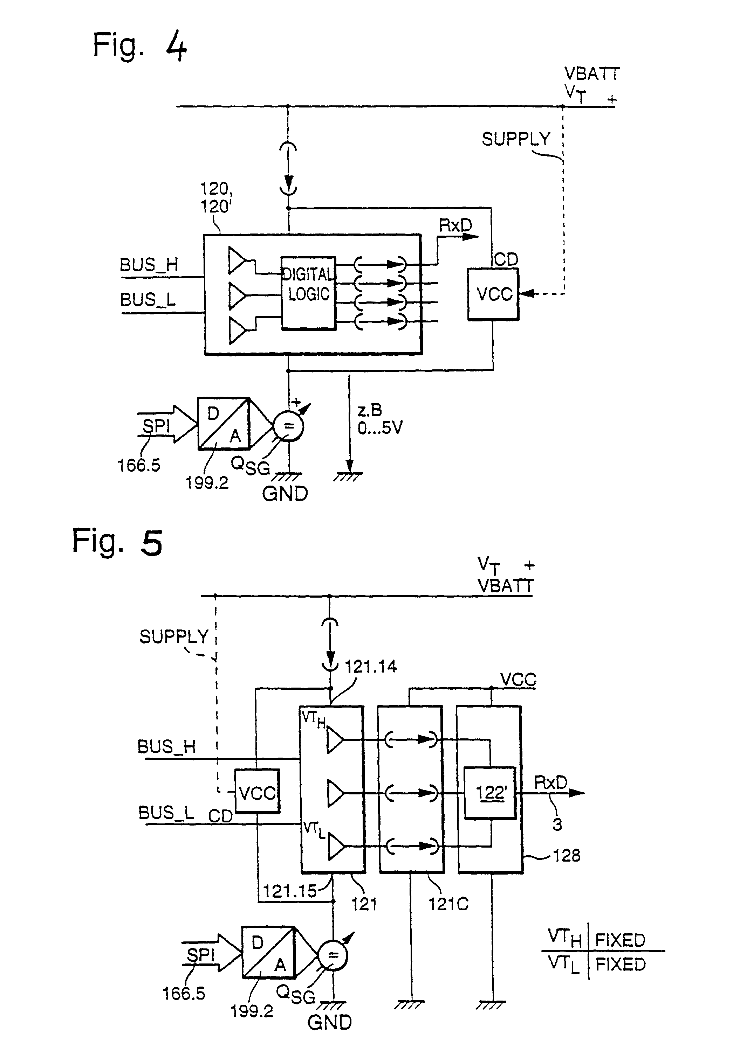

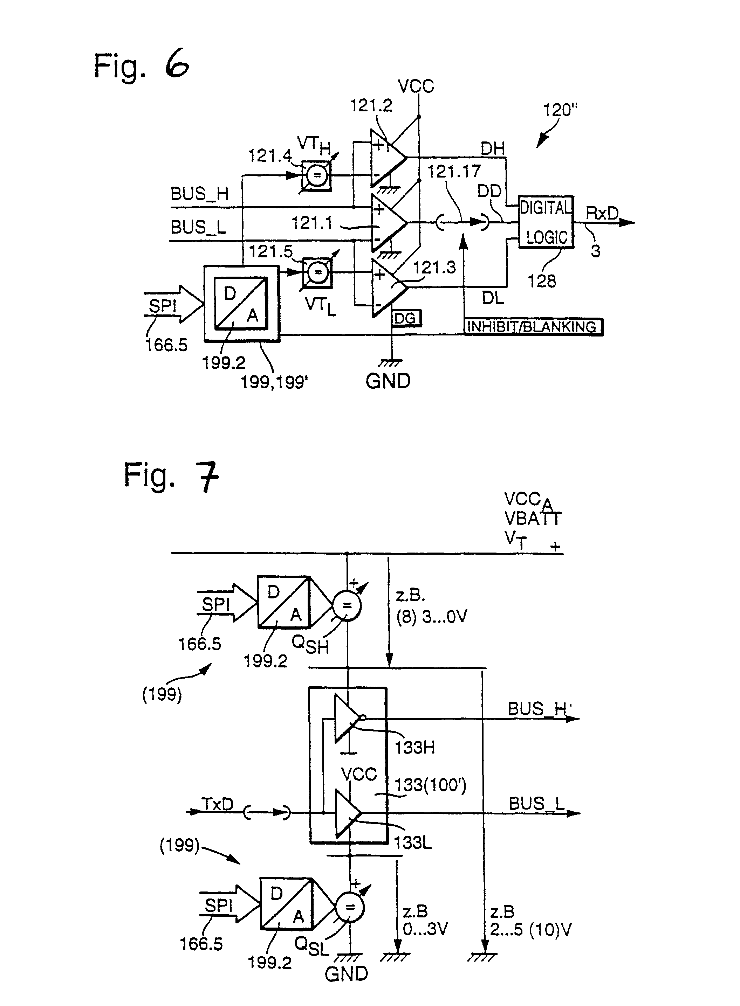

Gemäß **Fig. 4** ist der gesamte, vermöge einer Spannungsklammer oder eines Reglers CD mit einer Spannung VCC konstant versorgte Empfangsblock 120', 120'' (einschließlich Digitalteil) eines Transceivers eines Teilnehmers nach Maßgabe durch eine Offset-Quelle Q_{SG} um beispielhaft 0...5 Volt anhebbar. Dabei können interne Schwellenspannungen VT_{H} und VT_{L} (vgl. Fig. 6 unten) zur Überwachung der Spannungspegel auf den beiden Bus-Leitungen BUS_H und BUS L innerhalb des Empfangsblockes fest, auf netzspezifisch festgelegte feste "Abweichungswerte" umschaltbar oder variabel sein. Dieses Beispiel stellt insoweit eine Abwandlung des Beispiels gemäß **Fig. 2** dar, indem hier von einer zusammen mit den Eingangskomparatoren mitschwimmenden digitalen Auswertung ausgegangen wird, die ihrerseits hier ausgangsseitig über logische Strompfade an die Schaltkreisumgebung signalflußmäßig angeschlossen werden muß. Ein so ausgestatteter Teilnehmer kann z.B. einen sendenden Teilnehmer prüfen, wenn dieser ohne Last oder unter Betriebs- oder Testlast sendet, wodurch es bei jenem Teilnehmer stromflußbedingt und z.B. massekontaktmangelbedingt zur Ausbildung eines fehlerhaften Fußpunktspannungsabfalles kommt.

Gemäß **Fig. 5** kann z.B. aber auch nur der analog wirkende Diskriminationsteil 121.20 im Empfangsteil eines Transceivers mittels einer Fußpunkt-Offest-Quelle Q_{SG} gegenüber Massepotential verschiebbar ausgebildet sein, wobei die internen Schwellenspannungen VT_{H} und VT_{L} (vgl. Fig. 6 unten) zur Überwachung der Spannungspegel auf den beiden Bus-Leitungen BUS_H und BUS_L innerhalb des Empfangsblockes unveränderlich vorgegebene Größen sein können.

Im Vorrichtungsbeispiel gemäß **Fig. 6** ist der negative Versorgungsanschluß DG der die drei Komparatoren 121.1 bis 121.3 beispielhaft umfassenden analogen Struktur im Empfangsteil eines Bus-Transceivers mit Masse GND verbunden, hat also z.B. das Potential des Chip GND innerhalb eines entsprechenden Halbleiterschaltkreises. Prüfungserfordernissen gemäß eingestellt bzw. mit einem Offset unterlagert werden hier die Schwellenspannungsquellen 121.4 und 121.5 für die Komparatoren 121.2 und 121.3, welche deren Schwellenspannungen VT_{H} bzw. VT_{L} generieren. Gegen diese Schwellenspannungen werden normalerweise die Spannungspegel auf den beiden Busleitungen BUS_H und BUS_L im Empfangsbetrieb diskriminiert. Für hier interessierende Bezugspotentialtests kann der für Empfangszwecke normalerweise genutzte Digitalpfad 121.17 zwischen dem Komparator 121.1 und der Auswertungslogik 128 bedarfsweise unterbrochen werden.

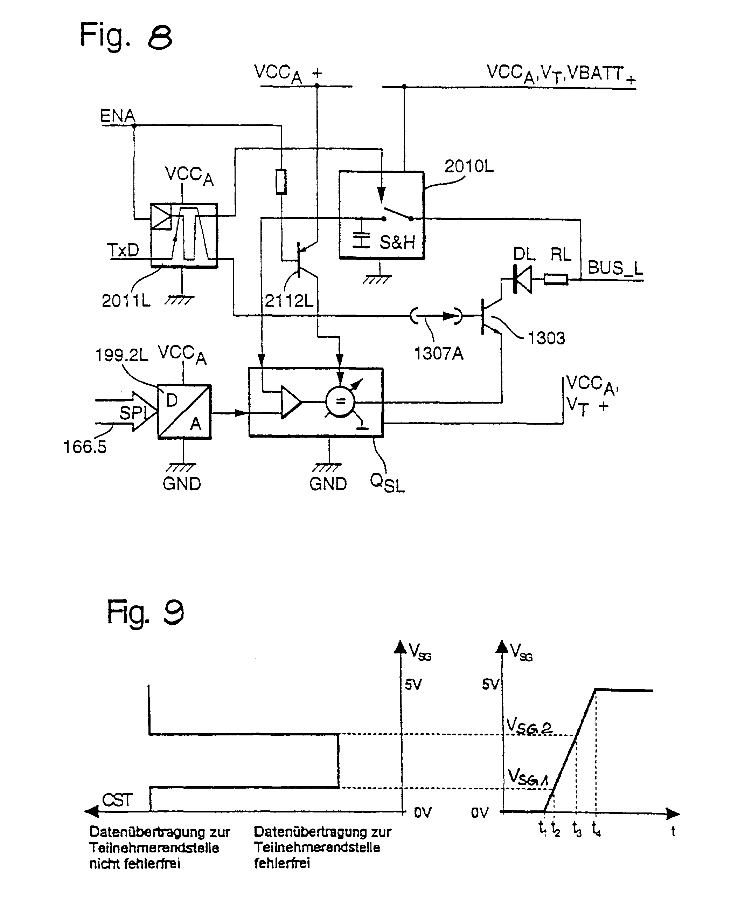

Es versteht sich, daß eine ähnliche, separate Zwei-Komparator-Struktur auch außerhalb eines Empfangsteiles (das dann über feste Vergleichsschwellen verfügen kann) als Bestandteil z.B. eines testfähigen Bus-Transceivers vorgesehen werden kann. Sie kann mit einfachen Mitteln zum datensignal-verketteten Sampeln des Potentials bzw. der Potentiale einer oder beider Busleitungen kombiniert werden, wobei dann je nach Auswahl der Verkettungsflanke des Datensignals wahlweise der dominante oder der rezessive Signalpegel erfaßbar ist. Ähnlich wie weiter unten in Verbindung mit Fig. 8 veranschaulicht, wird dabei das Sample-Zeitintervall kürzer als die Busbitzeit gewählt und der Abtastzeitraum vorzugsweise in den Schlußabschnitt der Busbitzeit gelegt. Dadurch können Messfehler durch Überschwingen und/oder Abklingschwingungen auf der Bitsignalschulter weitgehend ausgeblendet werden. Das eigentliche Sampeln kann in an sich bekannter Weise auf beliebigem Wege - z.B. auch durch einen schnelleinlesenden A/D-Mikrocontroller- erfolgen. Mehr dazu ist in der zeitgleich eingereichten Anmeldung **[4]** ausführlich dargestellt und beschrieben, so daß wegen solcher Details auf jene Offenbarung verwiesen wird.

Im Gegensatz zu Fig. 3 sind bei der Abwandlung gemäß
**Fig. 7** für Tests mit wahlweise einem oder zwei dominanten spannungspegel/n zwei separate, steuerbare Offset-Spannungsquellen Q_{SL} und Q_{SH} vorgesehen, wobei die Quelle Q_{SL} der auch bezüglich der Sendeendstufe 133 wirksamen aus Fig. 3 entspricht. Zur Anhebung des negativen Versorgungspotentials der Ader-Endstufe 133L ist die zusätzliche Quelle Q_{SH} so geschaltet, daß sie eine entsprechend digital steuerbare Veränderung des positiven Versorgungspotentials VCC oder VBATT bzw. V_{T} der Ader-Endstufe 133H erlaubt. Es sind hier also beide auf den Bus einspeisenden Quellenpegel veränderbar, nämlich der L-Quellenpegel unabhängig vom H-Quellenpegel, und vice versa.

Beispielsweise kann die steuerbare Offset-Quelle Q_{SL} einen Spannungshub von 0 bis 3 Volt und die steuerbare Offset-Quelle Q_{SH} einen solchen von 8 oder 3 bis 0 Volt überstreichen. Je nachdem, wie hoch das Versorgungspotential der Offset-Quelle Q_{SH} ist, kann bei dieser Vorrichtung also der dominante L-Quellenpegel von 0 bis 3 Volt und der dominante H-Quellenpegel von 3 oder 8 bis 0 Volt einstellbar sein. In der Praxis können die beiden Offset-Quellen Q_{SL} und Q_{SH} sowohl alternativ als auch simultan und unabhängig voneinander nutzbar sein.

Das Vorrichtungsdetail gemäß **Fig. 8** erlaubt ebenfalls eine dominante Potentialvorgabe beispielsweise auf die Busader BUS_L. Es sind nur wesentliche Elemente in beispielhaft möglicher Ausführung dargestellt. Insbesondere sind Elemente weggelassen, die die hier realisierte Direktregelung des Quellpotentials unterbinden, wenn z.B. Potentialverhältnisse vorliegen, welche eine Bestromung einer Busader unter Offset nicht erlauben. Wesentliches Element ist eine zwischen Versorgungsklemmen GND und z.B. V_{T} oder VBATT liegende Sample & Hold-Schaltung 2010L. Sie weist einen mit der Busader BUS_L beispielsweise unmittelbar verbundenen Eingang auf. Des weiteren ist eine vorzugsweise vom Datensignal TxD flankengetriggerte Impulsauslöseschaltung 2011L vorgesehen, die einen sehr kurzen, innerhalb der Datenbitzeit auf die gepfeilte Taktflanke folgenden Abtast-Impuls SP erzeugt, der hier beispielhaft nach GND gerichtet ist. Die Sample & Hold-Schaltung 2010L umfaßt neben dem eingangsseitigen Sampler beispielsweise noch ein Halteglied und erforderlichenfalls auch ausgangsseitige Impedanzkonversionsmittel nach dem Stande der Technik. Der Transistor 1303 ist durch die jeweils wirksame aktive Flanke des Datensignals TxD bereits leitend gesteuert, wenn der Abtastimpuls ausgelöst wird (Positiv-Maskierung). Durch diese Maßnahme ist kurze Zeit später im Augenblick des Abtastens über den leitenden Transistor 1303 der Regelkreis vom Ausgang der steuerbaren Offset-Quelle QSL über den Endstufentransistor 1303 sowie die Diode DL und den Schutzwiderstand RL bis zum Eingang der Sample & Hold-Schaltung geschlossen. Die von der Sample & Hold-Schaltung 2010L ausgegebene Abtastgröße und die Sollwertvorgabe vom D/A-Wandler 199.2L werden über Verbindungen der Offset-Quelle Q_{SL} zwecks deren Einstellung zugeführt. Durch ein ENA- bzw. NENA-Signal am Aktivierungseingang der Impulsauslöseschaltung 2011L und einem Deaktivierungseingang der Offset-Quelle Q_{SL} kann letztere zwecks Kurzschluß gegen Masse GND angesteuert und die Abtastimpulserzeugung in 2011L gesperrt werden. In diesem Zustand ist die betroffene Offset-Quelle Q_{SL} dann unwirksam.

Die vorbeschriebenen sowie die in der zeitgleich hinterlegten Anmeldung **[4]** beschriebenen Vorrichtungselemente sind geeignet, um die Durchführung des hier beschriebenen Verfahrens zu ermöglichen.

**Fig. 9** veranschaulicht den Kommunikationsstatus CST der Datenübertragung zu einem hier beispielhaft massefehlerhaften Busteilnehmer. Dabei ist im rechten Diagrammteil eine zwischen Zeitmarken t₁ und t₄ rampenförmig ansteigende Simulationsspannung V_{SG} dargestellt, die z.B. das Simulationsmodul 199A in Fig. 2 erzeugt, und im linken Diagrammteil das zwischen Zeitmarken t₂ und t₄ sich ergebende Fenster, innerhalb dessen eine Datenübertragung zum massefehlerbehafteten Busteilnehmer bzw. Empfänger in letzterem möglich ist. Dabei ist zur Zeit t₁ die Simulationsspannung V_{SG1} und zur Zeit t₂ die Simulationsspannung V_{SG2} erreicht. Aus dieser Darstellung ist sofort ersichtlich, daß eine Bewertung innerhalb eines Systems ganz erheblich vereinfacht werden kann, wenn z.B. statt einer rampenförmig verlaufenden Simulationsspannung eine quantisierte, d.h. eine mit über der Zeit stufenförmigem Verlauf benutzt wird, d.h., wenn netzweit gültig jeder Stufe aus einer festen Zahl von Stufen ein möglicher Offsetspannungswert entspricht.

Anhand dieser Darstellung ist auch nachvollziehbar, daß bei anfänglicher Vorgabe in einem am Bus liegenden Sender einer sehr hohen Simulationsspannung V_{SG} und anschließender Verringerung derselben derjenige Busteilnehmer, der als erster Empfangsfähigkeit erlangt, der ggfs. gesuchte mit dem größten Bezugspotentialfehler gegen Masse im Netz ist - ansonsten einwandfreie Funktion des Empfängers vorausgesetzt.

Umgekehrt ist bei anfänglicher Vorgabe in einem am Bus liegenden Sender keiner oder einer sehr niedrigen Simulationsspannung V_{SG} und anschließender Erhöhung derselben derjenige Busteilnehmer, der nach allen übrigen als letzter Empfangsfähigkeit erlangt, der ggfs. gesuchte mit dem größten Bezugspotentialfehler gegen Masse REM GND im Netz, vgl. auch **Fig. 2**.

Die Darstellung gemäß **Fig. 9** ist umgekehrt auch auf den Fall lesbar, daß z.B. ein sendender Teilnehmer z.B. bei voller Betriebslast eine Fußpunktfehlerspannung VFG aufweist und ein entsprechendes Simulationsmodul eine kompensierende Simulationsspannung V_{SG} erzeugt, welche wenigstens einen empfangshalber zu diskriminierenden Spannungspegel in Fehlerspannungsrichtung verschiebt.

Unter der Voraussetzung, daß alle Empfänger im Netz jedenfalls bezüglich ihrer in **Fig. 2** gezeigten teilnehmerinternen Bezugspotentialschiene SYS GND (innerhalb systemspezifischer Toleranzgrenzen) korrekte Schwellwerte für den Botschftsempfang wie auch immer aufweisen, folgt daraus, daß bei monotoner Veränderung der Simulationsspannung V_{SG} bei einem Sender und dabei konstanten Bürdeverhältnissen am Bus bzw. der unter Test stehenden Busader aus der Reihenfolge des Erlangens bzw. Verlierens der Empfangsfähigkeit von Busteilnehmern auf die relativen Höhen des Offsets zum Bezugspotential REM GND bei diesen Busteilnehmern geschlossen werden kann. Dies gilt universell sowohl unter Eindraht- als auch Zweidraht-Testbedingungen.

Wie im Lichte des obigen aus der **Fig. 2** unmittelbar ablesbar, ist es vom Bus BUS_H, BUS_L aus gesehen jeweils bedeutungslos, auf welche Weise der Empfänger und/oder Sender des Transceivers 100, 100' bzw. dessen diskriminante Empfangsschwellwerte bzw. dominanter/n Quellenpegel potentialmäßig angehoben wird oder dessen/deren in Bezug auf den Bus wirksame Betriebspegel verfälscht werden.

Dasselbe gilt sinngemäß auch für die rezessiven Pegel. Im Hinblick auf Potentialfehler reicht es für das erfindungsgemäße Verfahren also bereits aus, in Bezug auf ein netzweit beziehbares Potential (REFerence GRounD) offsetmäßig nur solche Teile im Empfänger bzw. Sender des Transceivers 100, 100' eines Teilnehmers zu beeinflussen, welche die vom Bus her gesehen in Bezug auf REF GND effektiv wirksamen Empfangsschwellwerte bzw. im Sendefalle dominanten Quellenpegel bestimmen.

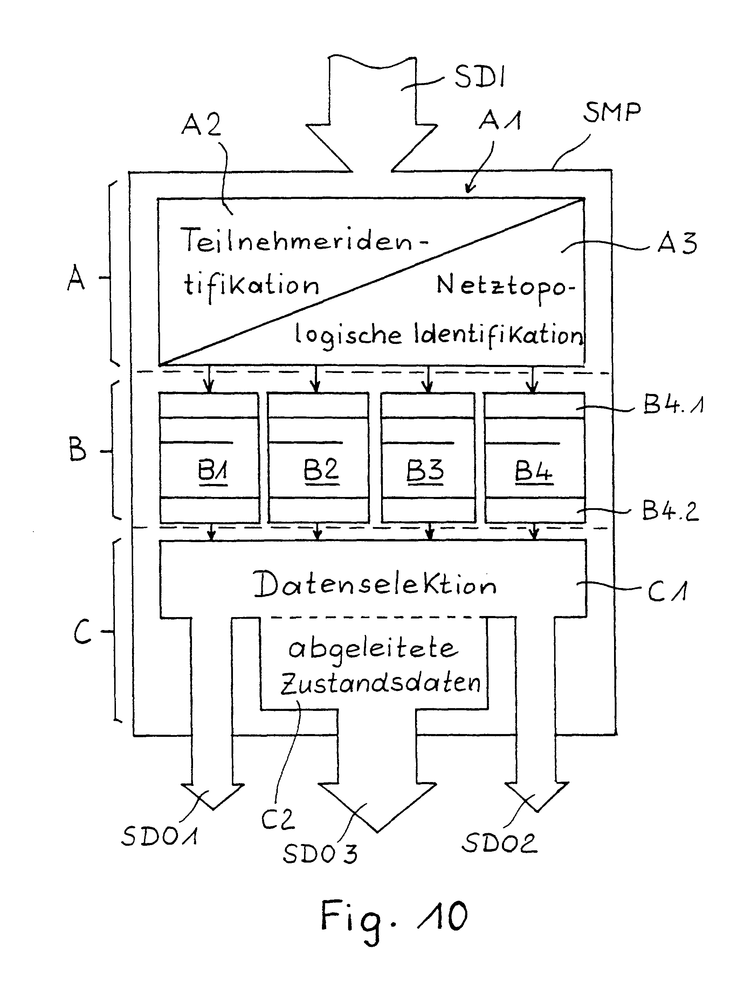

In **Fig. 10** ist eine Zustands-Map mit einer beispielhaften, relativ einfachen Struktur illustriert. Diese Struktur kann jedoch je nach den Gegebenheiten eines Netzes und seiner betrieblichen Besonderheiten und spezifischen Fehlerwahrscheinlichkeiten auch anders beschaffen sein.

Bei der Zustands-Map im Sinne der Erfindung handelt es sich im einfachsten Falle um einen Speicherbereich, der vorzugsweise ein Verzeichnis der Teilnehmer des Systems enthält und in welchem Zustands-Daten über die für die Kommunikation wesentlichen Signalkriterien der Teilnehmer ECU1 bis ECU8 abgelegt sind. Im Rahmen der Erfindung wird eine Zustands-Map allgemein jedoch über diese rein physikalische Minimalverkörperung hinausgreifend verstanden. Beispielsweise kann sie begrifflich auch speicherunterstützende Hilfsschaltmittel und Elemente wenigstens eines Rechnerprogrammes mitumfassen, welche erforderlich sind, um darin Daten - d.h. ihren Inhalt - zu verändern, Daten darin sukzessive anders anzuordnen oder z.B. nach Maßgabe durch eine fest vorgegebenen Mikroprogrammierung aus bestimmten Daten andere Daten abzuleiten. Eine solche Ableitung kann im Rahmen der Erfindung beispielsweise in Abhängigkeit von Prüfungen verschiedener Teilnehmer bezüglich eines bestimmten Teilnehmers erfolgen, d.h. bei Erfassung eines Signalkriteriums unter Beteiligung eines zusätzlichen Teilnehmers oder mehrerer zusätzlicher Teilnehmer als Meßzeuge/n, oder in Zusammenhang mit einem Bestätigungsprüfbetrieb zwischen mehreren Teilnehmern und der Zustands-Map bezüglich eines oder mehrerer Teilnehmer (Witness- bzw. Approver-Betrieb mit der Zustands-Map als Approver). Mit diesem Verständnis ist eine Zustands-Map im Sinne der Erfindung also in Verbindung mit einem Rechner zu sehen, wie er z.B. in jedem der Teilnehmer ECU1 bis ECU8 enthalten ist.

Die Zustands-Daten werden durch Diskrimination, Prüfung bzw. Überprüfung oder Messung von dem System bezüglich einzelner Teilnehmer ermittelt, letztlich also von den bzw. durch die Teilnehmer/n selbst. Dies geschieht beispielsweise nach Maßgabe durch wenigstens bestimmte Teile der Software zum Betrieb des vernetzten Systems bzw. unter deren vollständiger Kontrolle.

In einer solchen Zustands-Map können auch abgeleitete Größen wie z.B. wenigstens ein Fehlerabstandsmaß und/ oder eine Trendgröße bezüglich eines Signalkriteriums (erzeugt worden und) abgelegt sein. Eine Zustands-Map im Sinne der Erfindung stellt jedenfalls eine eindeutige Zuordnung von Teilnehmern und/oder deren Position innerhalb der Topologie des Netzes und charakteristischen Signalkriterien von Teilnehmern bzw. am Ort von Teilnehmern her, welche der Möglichkeit und/oder Gefahr zeitlicher Veränderung unterliegen mit der Wirkung einer Beeinträchtigung der netzweiten Kommunikation zwischen Teilnehmern.

In diesem Zusammenhang kann die Zustands-Map insbesondere auch in die Vergangenheit zurückreichende Zuordnungen dieser Art herstellen, woraus die Möglichkeit von Aussagen über Entstehungsursachen und/oder Entstehungsdauer und/oder den Grad einer Fehlerwahrscheinlichkeit (z.B. Fehlerabstandsmaß zu gering) bzw. Fehlerlatenz (z.B. Zweidrahtbetrieb noch möglich, Eindrahtbetrieb wäre jedoch im Bedarfsfalle bereits nicht mehr möglich) resultiert. Weitere Eigenschaften der Zustands-Map ergeben sich aus der die Ansprüche reflektierenden Beschreibungseinleitung; wie oben erwähnt sind sie keinesfalls auf die Behandlung von Bezugspotentialfehlern beschränkt oder in einschränkender Weise an die Art und Weise, wie im System Signalkriterien diskriminiert, geprüft bzw. überprüft oder gemessen werden, gebunden.

In diesem Sinne gliedert sich die Zustands-Map SMP gemäß **Fig. 10** beispielhaft in einen Identifikationsabschnitt A, ein Datenstack B und einen Datenbearbeitungsabschnitt C. Unabhängig von der Feinstruktur erweist sich diese Untergliederung in sehr vielen Fällen als zweckmäßig. Der Identifikationsabschnitt A enthält hier beispielhaft eine Tabelle A1, über die jedem System-Identifier und/ oder jedem Teilnehmer im System bedarfsweise seine topologische Identifikation bzw. ein topologischer Identifier innerhalb des Netzes zugeordnet werden kann. Zu diesem Zweck ist hier beispielsweise einem Feld A2 "Teilnehmeridentifikation das Feld A3 "Netztopologische Identifikation" zugeordnet.

Die durch den Identifikationsabschnitt A behandelten Daten sind dem Datenstack B zuführbar. Das Datenstack B weist hier für vier Signalkriterien vier Registerstacks B1 bis B4 auf. Im obersten Stackregister B4.1 liegen die Daten des jüngsten vierten, im untersten Stackregister B4.2 die Daten des ältesten vierten Signalkriteriums für die einzelnen Teilnehmer des Systems. Diese Organisation nach Signalkriterien kann Vorteile bieten hinsichtlich nachträglicher Erweiterungen des vernetzten Systems um weitere Teilnehmer. Die vier Registerstacks B1 bis B4 können abhängig von der Bedienungssoftware und Feinstruktur der kooperativen Rechnerumgebung mit wahlfreiem Zugriff, als FIFOs oder LIFOs ausgeführt sein. Daten aus den Registerstacks B1 bis B4 sind dem Datenbearbeitungsabschnitt C zuführbar. Dieser Abschnitt umfaßt hier beispielhaft nur ein Datenselektionsfeld C1 und ein Bearbeitungsfeld C2. Letzteres dient der Ableitung von Daten, beispielsweise von Trendgrößen, aber auch von z.B. Alarm-Flags. Mittels eines solchen Alarm-Flags kann z.B. in **Fig.1** von der Zustands-Map MP1 aus das Signalisierungselement AD des Teilnehmers ECU7 über den Bus ausgelöst werden.

Daten können flüchtig oder nichtflüchtig in der Map gehalten werden, beides auch abschnittsweise unterschiedlich. Im Falle nichtflüchtiger Speicherung beispielsweise der Tabelle A1 muß diese bei Inbetriebnahme des Systems jeweils geladen werden. Gespeist wird die Zustands-Map SMP über ihren Erfassungspfad SDI, der der allfälligen Datenversorgung der Zustands-Map dient. Signalkriterien charkterisierende Zustands-daten sind selektiert über Zustandspfade SDO1 und SDO2 der Map entnehmbar. Abgeleitete Daten bezüglich Signalkriterien im System bzw. von Teilnehmern sind vorzugsweise über einen besonderen Zustandspfad SDO3 der Map entnehmbar.

Beispielsweise kann das Prüfgerät ETU in **Fig. 1** selektierte Daten über SDO1 und/oder SD02 über den Bus zur eigenen Bearbeitung auslesen. Dies kann zweckmäßig sein, wenn es sich dabei um ein Werkstattgerät mit umfänglichem Prüfprogramm handelt. Gleichwohl kann eine solche Auslesung auch davon abhängig gemacht werden, daß über SD03 der Zustands-Map abgeleitete Daten bestimmter Art, oder z.B. bestimmte Flags, die z.B. aufgrund einer trendauswertenden Grenzwertüberschreitung in Abschnitt C2 gesetzt wurden, auslesbar sind. Dies kann zweckmäßig sein, wenn es sich beim Prüfgerät ETU beispielsweise um einen kleinen mobilen Tester handelt, der nur bei Erfordernis einen Datenträger zur Weiterverarbeitung in einem größeren Werkstattgerät beschreibt.

Die Liste A1 kann z.B. auch durch einen eingangsseitigen Multiplexer ersetzt sein, der das Datenstack B ausgangsseitig z.B. entsprechend der Anzahl zu überwachender Signalkriterien entsprechend vielkanalig bedient. Da sich Kommunikationsbeeinträchtigungen in einem Netz jedoch in der Regel an verschiedenen Orten des Netzes ganz unterschiedlich auswirken, bietet eine solche Liste in vielen Fällen Vorteile wie folgt. Über diese Liste sind bedarfsweise Signalkriterien Kommunikationsknoten im Netz topologisch zuordenbar, d.h. bestimmte Orte am Systemträger. Diese Zuordnung dient der Fähigkeit einer Zustand-Map in Verbindung mit der sie betreibenden Software, anläßlich des Einbrechens eines bestimmten Fehlerabstandsmaßes eines Signalkriteriums bezüglich eines bestimmten Teilnehmers andere Teilnehmer mit fehlerursachenspezifisch topologischer Nähe (im hier gewählten Beispiel von Potentialfehlern also z.B. Masseversorgung mehrerer Teilnehmer von ein- und demselben Anschlußpunkt, d.h. Ort aus) in Überprüfungen bevorzugt bzw. verstärkt miteinzubeziehen.

Dadurch kann bei noch bestehender Kommunikationsfähigkeit frühzeitig der Kreis kommunikationsfehlergefährdeter Teilnehmer bestimmt und daraus Art und Dringlichkeit beispielsweise eines Service-Requests über das Anzeigeelement AD abgeleitet werden. Bei schon eingetretener Einschränkung oder Störung der Kommunikationsfähigkeit kann aus bis unmittelbar davor in der Map abgelegten Zustands-Daten die wahrscheinliche Fehlerursache am Systemträger und deren Ort schnell und einfach eingegrenzt und beispielsweise mittels eines Prüfgerätes ETU gemäß **Fig. 1** ausgelesen werden.

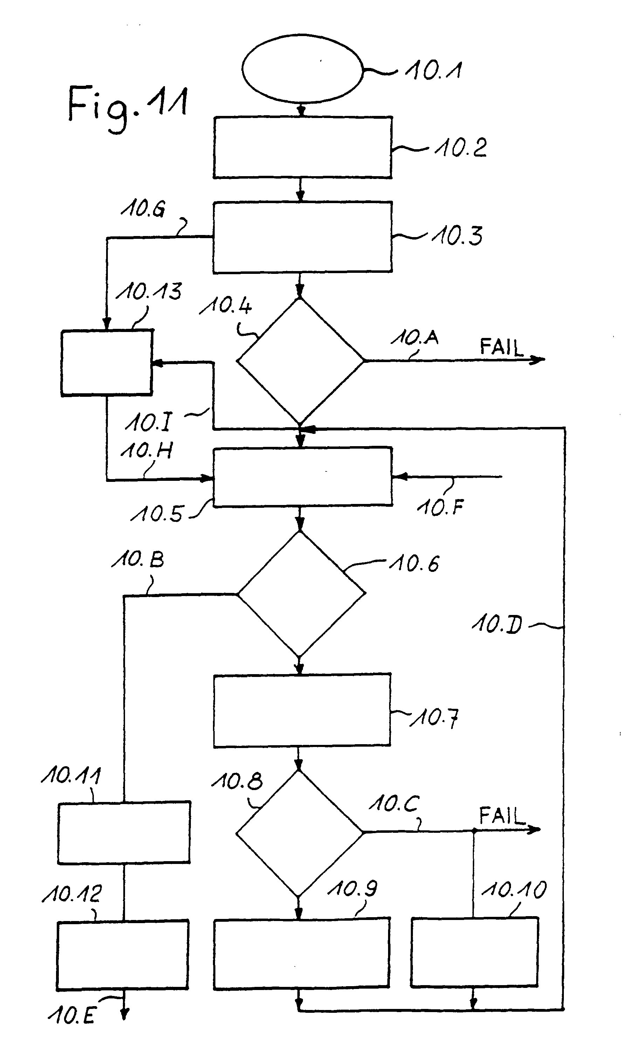

**Fig. 11** veranschaulicht in flußdiagrammatischer Darstellung das erstansprüchliche Verfahren, wobei nicht die Minimalversion wie in der Beschreibungseinleitung erwähnt dargestellt ist, sondern bereits einige beispielhafte Erweiterungen optionaler Art getroffen sind. Dabei ist zur Übersicht beispielhaft davon ausgegangen, daß alle Teilnehmer im vernetzten System bezüglich aller Signalkriterien geprüft werden.

Im Schritt 10.1 wird die Betriebsmöglichkeit des System geschaffen, indem es z.B. bestromt und dadurch gestartet wird. Im Schritt 10.2 wird die Software zur Prüfung und Sicherung der Verfügbarkeit des vernetzten Systems aktiviert. Soweit letztere in die Software zum Betrieb des Netzes integriert ist, erfolgt die Aktivierung im Zuge der Aktivierung der Software zum Betrieb des vernetzten Systems. Dabei wird im Schritt 10.3 das vernetzte System initialisiert. Schon in diesem Zusammenhang können zunächst netzweit alle Teilnehmer in definierte Betriebszustände gesteuert werden. Im nächsten Schritt 10.4 erfolgt eine Abfrage, ob die Initialisierung des vernetzten Systems erfolgreich abgeschlossen worden ist. Falls dies aufgrund eines Fehlers nicht möglich war, erfolgt eine Error-on-Startup-Fehlerbehandlung (FAIL) über den Pfad 10.A. Falls die Initialisierung erfolgreich abgeschlossen werden konnte, werden im Schritt 10.5 aus der Zustands-Map den nächsten (momentan also den ersten) zu prüfenden Teilnehmer und/ oder das nächste (momentan also das erste) zu prüfende Signalkriterium beschreibende Daten geholt. Im Schritt 10.6 können diese Daten danach abgefragt werden, ob die aktuell durchzuführende Prüfung einen bereits geprüften (nämlich den ersten) Teilnehmer und/oder ein bereits geprüftes (nämlich das erste) Signalkriterium betrifft. Ist dies der Fall, erfolgt eine Verzweigung 10.B zum Schritt 10.11, der weiter unten beschrieben wird. Ist dies nicht der Fall, erfolgt im Schritt 10.7 die Diskrimination oder Prüfung oder Messung des aktuellen Signalkriteriums in Bezug auf den aktuell ausgewählten Teilnehmer. Danach wird im Schritt 10.8 abgefragt, ob Testbarkeit gegeben und/oder das Ergebnis grundsätzlich plausibel war. Ist dies nicht der Fall, liegt bereits ein - wenigstens latenter - Kommunikationsfehler vor und es kann über den Abzweig 10.C beispielsweise einerseits eine teilnehmer- und/oder signalkriteriumgebundene Test-Fail-Anzeige, also z.B. AD in ECU 7 in **Fig. 1,** und andererseits im Schritt 10.10 das Setzen eines entsprechenden Fehler-Flags im Abschnitt C2 der Zustands-Map erfolgen (abgeleitete Zustands-Daten). Ist dies jedoch der Fall, erfolgt im Schritt 10.9 der Eintrag des Resultats der Diskrimination oder Prüfung oder Messung in Datenform in das betreffende Registerstack (B1...B4) im Abschnitt B der Zustands-Map. Sowohl nach dem Schritt 10.9 als auch nach dem Schritt 10.10 erfolgt ein Rücksprung vor den Schritt 10.5, worauf der nächste Unterzyklus mit dem nächsten Teilnehmer und/oder Signalkriterium beginnt. Wird schließlich die oben bereits erwähnte Verzweigung 10.B erreicht, erfolgt im Schritt 10.11 die Ermittlung wenigstens eines Fehlerabstandsmaßes des vernetzten Systems bezüglich wenigstens eines geprüften Signalkriteriums. Im abschließenden Schritt 10.12 können optional entweder zur Abfrage aus der Map Zustands-Daten in den Abschnitt C1 der Zustands-Map selektiert und/oder zur Vorbereitung des nächsten Zyklus die "Verschiebung" (also z.B. Altern von Daten durch Umordnen) aktueller Daten in ältere Daten vorgenommen oder zur Durchführung im nächsten angestoßenen Prüfdurchlauf vorbereitet werden. Über den Ausgang 10.E wird die beschriebene Prüfroutine gestoppt. Die Zustands-Map kann dann z.B. in einen Standby-Mode fallen, bis durch die Software zum Betrieb des vernetzten Systems am Eingang 10.F der nächste Prüfzyklus mit Aktivierung des Schrittes 10.5 angeworfen wird.

Als Option ist hier ferner noch ein Schritt 10.13 illustriert, der vom Schritt 10.3 aus über 10.G ausgelöst wird. Der Schritt 10.13 hat z.B. folgende Bewandnis. Im Schritt 10.3 wird das vernetzte System initialisiert. Die Initialisierung ist beispielsweise im Normalfall nach einer bestimmten Grenzzeit abgeschlossen. Über den Pfad 10.I kann im Schritt 10.13 geprüft werden, ob bezüglich der erfolgten Initialisierung die hierfür vorgesehene Grenzzeit überschritten wurde. Dies kann systemspezifisch z.B. infolge einer bekannten Bedingung nicht ausgeschlossen sein, die es zweckmäßig erscheinen läßt, initial zunächst ein bestimmtes Signalkriterium in Bezug auf einen Teilnehmer oder umgekehrt einen bestimmten Teilnehmer in Bezug auf ein Signalkriterium zu prüfen. Über 10.H wird eine entsprechend spezifische Auswahl beispielsweise durch Maskierung insoweit unerwünschter Teilnehmer bzw. Signalkriterien in der Zustands-Map für den ersten Unterzyklus bewirkt. Da bereits nach dem ersten Unterzyklus das Initialisierungssignal über 10.G fehlt, bleibt 10.D-11.I dann ohne Wirkung, besagte Maske wird folglich gelöscht und der Schritt 10.5 wird im folgenden dann wie oben beschrieben ausgeführt.

Bis hierher ist davon ausgegangen, daß alle Teilnehmer im vernetzten System bezüglich aller Signalkriterien geprüft werden. Dies kann in vielen Fällen und jedenfalls nach dem Einschalten des Systems sinnvoll sein. Davon kann aber in einfacher Weise abgegangen werden, indem unter Beibehaltung des Flußgraphen gemäß **Fig. 11** einfach nur der Funktionsinhalt bestimmter Schritte überschrieben wird. So können z.B. die Schritte 10.5 und 10.13 überschrieben werden dahingehend, daß im Schritt 10.5 immer nur der nächste zu prüfende Teilnehmer aus der Zustands-Map geholt wird während der Schritt 10.13 mit der Funktion eines Signalkriterienzählers belegt wird, welcher jeweils nach Abzählung der Teilnehmer über 10.D und 10.I nach Vorgabe aus der Zustands-Map über 10.H das nächste zu prüfende Signalkriterium fix vorgibt. Es versteht sich, daß im Zge derselben Vorgabe aus der Zustands-Map auch jede beliebige Beschränkungen auf nur bestimmte Teilnehmer erfolgen kann. Wird des weiteren z.B. der Funktionsinhalt der Schritte 10.11 und 10.12 dahingehend überschrieben, daß im Schritt 10.11 das Fehlerabstandsmaß bezüglich des aktuell in Prüfung befindlichen Signalkriteriums bezüglich aller geprüfter Teilnehmer gebildet wird und im Schritt 10.12 derjenige Teilnehmer markiert wird, dessen Fehlerabstandsmaß das kleinste war, ist z.B. das Verfahren gemäß Anspruch 6 realisiert.

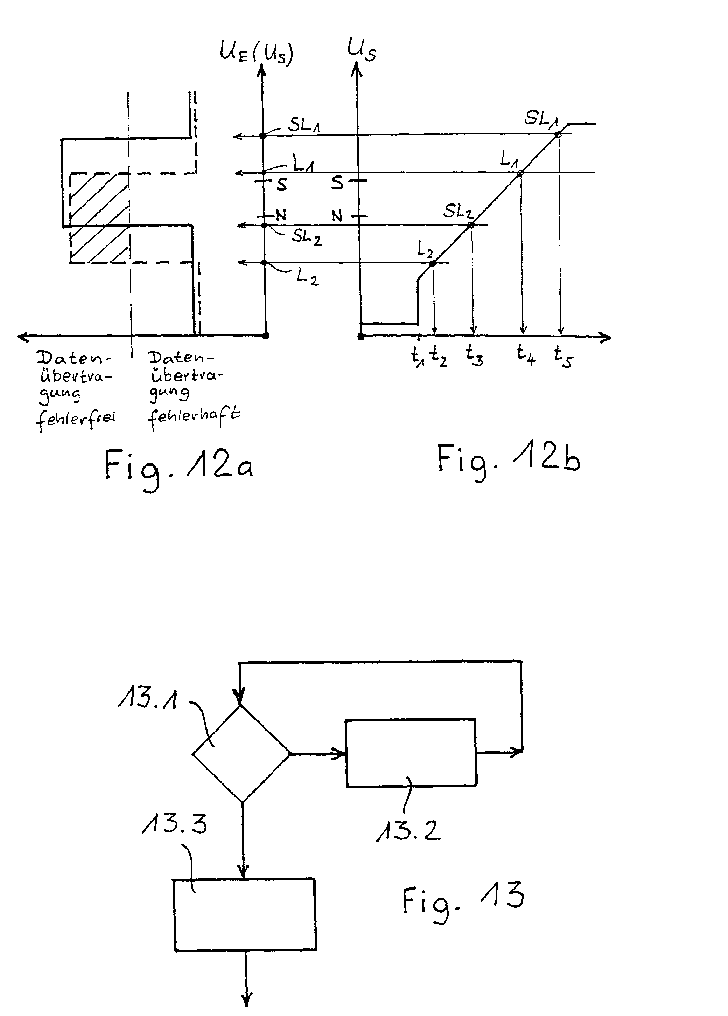

**Figen. 12a, Fig. 12b** und **Fig. 13** veranschaulichen für den herausgegriffenen Sonderfall der Prüfung auf Bezugspotentialfehler ein abgewandeltes Verfahren gemäß Anspruch 2.
Dabei veranschaulicht **Fig. 12a** das Fenster fehlerfreier Datenübertragung, wenn ein sendender Teilnehmer zwecks Prüfung eines empfangenden Teilnehmers einen Sendespannungspegel ändert.

Dabei ist mit "N" der Sollwert eines Spannungspegels bezeichnet, der üblicherweise von dem Daten sendenden Teilnehmer auf den Bus ausgesendet und bei störungsfreiem Betrieb der Datenübertragung von dem empfangenden Teilnehmer erkannt wird. Mit "L₁" und "L₂" sind die Toleranzschwellen bezeichnet, innerhalb derer ein auftretender Spannungswert vom empfangenden Teilnehmer bei der Datenübertragung noch erkannt werden soll.

Des weiteren ist noch ein weiterer, nach oben verschobener Spannungspegel "S" bezeichnet, sowie damit korrespondierende, ebenfalls verschobene Grenzwerte "SL₁" und "SL₂". Ein solch höherer Spannungspegel "S" eines sendenden Teilnehmers wird von einem empfangenden Teilnehmer beispielsweise als ein Spannungspegel entsprechend wenigstens dem normalen Toleranzwert "L₂" erkannt, wenn das Bezugspotential des empfangenden Teilnehmers entsprechend nach oben verschoben ist. Wie oben gezeigt, kann dies beispielsweise wegen einer mangelhaften Massekontaktierung vorkommen.

In **Fig. 12b** ist ein beispielhafter Spannungsverlauf Uₛ eines Daten sendenden Teilnehmers bei der Überprüfung eines potentialfehlerverdächtigen Teilnehmers bei Empfang veranschaulicht. Im Zeitpunkt t₂ wird/werden die Leitung/Leitungen mit einem Spannungspegel entsprechend dem Spannungswert "L₂" beaufschlagt. Da im dargestellten Ausführungsbeispiel der Daten empfangende Teilnehmer jedoch einen höheren Spannungspegel "SL₂" benötigt, um - wegen seiner mangelhaften Massekontaktierung - auf den normalerweise mit dem Spannungspegel "N" verbundenen Wahrheitszustand zu schließen, kann der empfangende Teilnehmer im Zeitpunkt t₂ noch nicht erkennen, daß Daten gesendet werden.

Im weiteren Verlauf ist gezeigt, daß der Daten sendende Teilnehmer seinen mit diesem Wahrheitszustand zu verbindenden Sendepegel Uₛ erhöht. Im gezeigten Ausführungsbeispiel erfolgt die Erhöhung des Pegels kontinuierlich. Diese Erhöhung kann aber auch in anderer Weise erfolgen, beispielsweise in mehr oder weniger kleinen Schritten.

Wenn der Sendepegel Uₛ den Grenzwert "SL₂" erreicht hat, wird von dem empfangenden Teilnehmer auf den normalerweise dem normalen Sendepegel "N" zugeordneten Wahrheitszustand geschlossen. Ein weiterer Anstieg des Sendepegels kann dann unterbleiben, weil mit der Feststellung des unteren Grenzwertes SL₂ aus der Differenz zum Sollwert L₂ die Verschiebung des empfangsseitigen Bezugspotentials für den einen betrachteten Teilnehmer bereits gefunden ist.

Andererseits kann aus einer Mehrzahl von Teilnehmern derjenige mit dem größten Potentialfehler leicht erkannt werden, indem der Sendepegel Us weiter erhöht wird, bis im Zeitraum zwischen t₄ und t₅ nur noch der Teilnehmer mit dem größten Potentialfehler Daten empfangen kann und dieser im Zeitpunkt t₅ dann als letzter empfangsunfähig wird, wenn U_{S} bis auf SL₁ angestiegen ist. Zur weiteren Auswertung werden entsprechende Werte dann in der Zustands-Map gespeichert und dort verfügbar gehalten.

Ein Ausführungsbeispiel eines Verfahrens ist in **Fig. 13** dargestellt.

Im Schritt 13.1 wird zunächst überprüft, ob von dem empfangenden Teilnehmer ein Spannungspegel Uₛ erkannt wird/wurde, der wenigstens dem Wert "L₂" entspricht. Ist dies nicht der Fall, erfolgt ein Übergang zu dem Schritt 13.2, in dem eine Erhöhung des Sendepegels des sendenden Teilnehmers um einen gewissen Betrag erfolgt. Im Anschluß daran erfolgt ein Rücksprung zu dem Schritt 13.1. Wenn in dem Schritt 13.1 von dem empfangenden Teilnehmer ein Spannungspegel Uₛ größer oder gleich "L₂" erkannt wird/wurde, erfolgt ein Übergang zu dem Schritt 13.3, in dem ein Dateneintrag in die Zustands-Map erfolgt, welcher den für diese Erkennung zuletzt benötigten Sendespannungpegel repräsentiert.

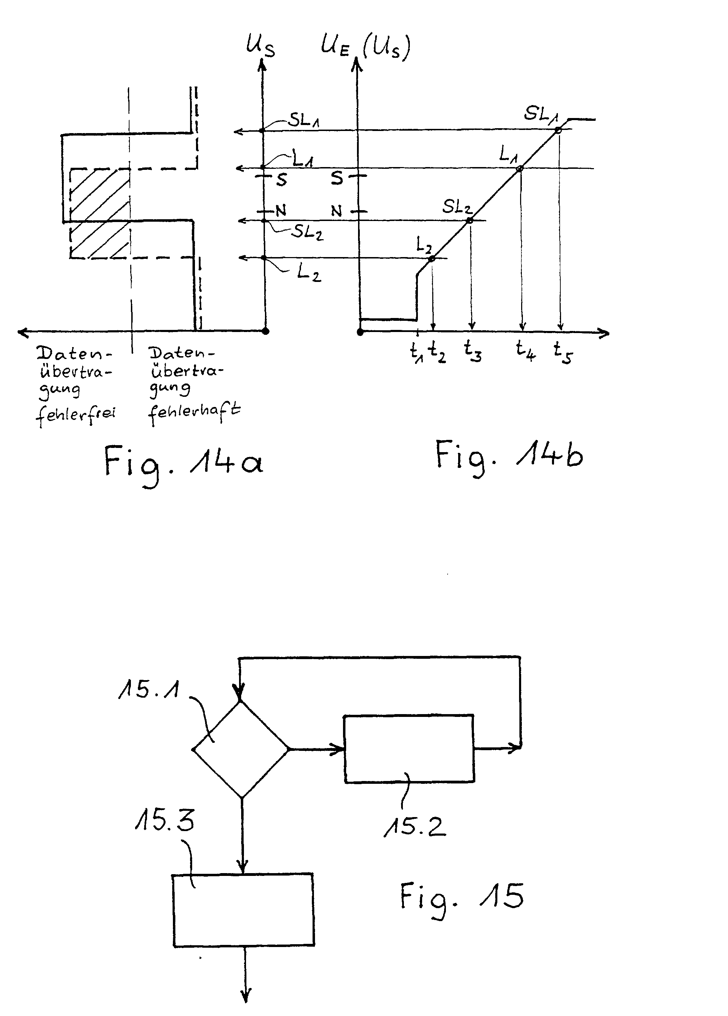

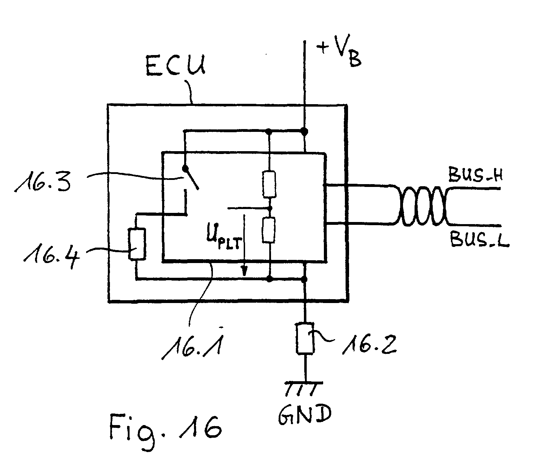

**Figen. 14a, Fig. 14b** und Fig. **15** veranschaulichen für den herausgegriffenen Sonderfall der Prüfung auf Bezugspotentialfehler ein abgewandeltes Verfahren gemäß Anspruch 3.
Dabei veranschaulicht **Fig. 14a** das Fenster fehlerfreier Datenübertragung, wenn ein empfangender Teilnehmer zwecks Prüfung eines sendenden Teilnehmers einen diskriminanten Bezugsspannungspegel ändert.

Dabei ist mit "N" der Sollwert eines Spannungspegels bezeichnet, der üblicherweise bei störungsfreiem Betrieb von dem Daten sendenden Teilnehmer auf den Bus ausgesendet und bei störungsfreiem Betrieb der Datenübertragung von dem empfangenden Teilnehmer auch erkannt wird. Mit "L₁" und "L₂" sind die Toleranzschwellen bezeichnet, innerhalb derer auftretende Spannungswerte vom empfangenden Teilnehmer bei der Datenübertragung noch erkannt werden sollen.

Des weiteren ist noch ein weiterer, nach oben verschobener Spannungspegel "S" bezeichnet, sowie damit korrespondierende, ebenfalls verschobene Grenzwerte "SL₁" und "SL₂". Ein solch höherer Spannungspegel "S" eines sendenden Teilnehmers wird dann ausgesendet, wenn das Bezugspotential des Datensenders entsprechend nach oben verschoben ist. Wie oben gezeigt, kann dies beispielsweise wegen einer mangelhaften Massekontaktierung vorkommen.

Da im dargestellten Ausführungsbeispiel der Daten empfangende Teilnehmer jedoch eine höhere diskriminante Bezugsspannung entsprechend dem Grenzwert "SL₂" benötigt, um - wegen der mangelhaften Massekontaktierung des sendenden Teilnehmers - auf den normalerweise mit dem Spannungspegel "N" verbundenen Wahrheitszustand zu schließen, kann der empfangende Teilnehmer im Zeitpunkt t₂ noch nicht erkennen, daß Daten gesendet werden. Im Zeitpunkt t₂ beginnt der empfangende Teilnehmer mit einer diskriminanten Bezugsspannung entsprechend dem unteren Grenzwert L₂ zu kontrollieren, ob er Daten erkennen kann.

In **Fig. 14b** ist ein beispielhafter Verlauf einer diskriminanten Bezugsspannung U_{E} eines Daten empfangenden Teilnehmers bei der Überprüfung eines beim Senden potentialfehlerverdächtigen Teilnehmers veranschaulicht. Dabei wird die Spannung U_{E} variiert. Im Zeitpunkt t₂ wird/ werden die Leitung/Leitungen von dem sendenden Teilnehmer mit seinem Sendepegel beaufschlagt, wobei jedoch aufgrund eines vorliegenden Bezugspotentialfehlers beim sendenden Teilnehmer vom empfangenden Teilnehmer noch keine Daten erkannt werden können.

Im folgenden wird im empfangenden Teilnehmer die empfangsdiskriminante Bezugsspannung U_{E} erhöht bis zum Wert "SL₂", bei dem die Übertragung von Daten erkannt wird. Im gezeigten Ausführungsbeispiel erfolgt die Erhöhung des empfangsseitig diskriminanten Bezugspegels kontinuierlich. Diese Erhöhung kann aber auch in anderer Weise erfolgen, beispielsweise in mehr oder weniger kleinen Schritten.

Wenn der empfangsseitig diskriminante Bezugspegel U_{E} den Grenzwert "SL₂" erreicht hat, wird von dem empfangenden Teilnehmer auf den normalerweise dem normalen Sendepegel "N" zugeordneten Wahrheitszustand geschlossen. Ein weiterer Anstieg des empfangsseitig diskriminanten Bezugspegels U_{E} kann dann in der Regel unterbleiben, weil mit der Feststellung des unteren Grenzwertes SL₂ aus der Differenz zum Sollwert L₂ die Verschiebung des sendeseitigen Bezugspotentials bereits gefunden ist.

Andererseits kann aus einer Mehrzahl von sendenden Teilnehmern derjenige mit dem größten Potentialfehler leicht erkannt werden, indem der empfangsseitig diskriminante Bezugspegels U_{E} weiter erhöht wird, bis im Zeitraum zwischen t₄ und t₅ nur noch der Teilnehmer mit dem größten Potentialfehler empfangen werden kann, bis dieser im Zeitpunkt t₅ dann ebenfalls nicht mehr empfangen werden kann, wenn U_{E} bis auf SL₁ angestiegen ist. Zur weiteren Auswertung werden entsprechende. Werte dann in der Zustands-Map gespeichert und dort verfügbar gehalten.

Ein Ausführungsbeispiel eines Verfahrens ist in **Fig. 15** dargestellt.

In dem Schritt 15.1 wird zunächst überprüft, ob von dem empfangenden Teilnehmer ein Signalpegel erkannt wird, der wenigstens dem Wert "L₂" entspricht. Ist dies nicht der Fall, erfolgt ein Übergang zu dem Schritt 15.2, in dem durch Erhöhung einer diskriminanten Bezugsspannung U_{E} eine Erhöhung der Ansprechspannungsschwelle dessen Empfängers erfolgt. Im Anschluß daran erfolgt ein Rücksprung zu dem Schritt 16.1. Wenn in dem Schritt 16.1 von dem empfangenden Teilnehmer ein Signalpegel größer oder gleich "L₂" erkannt wird/wurde, erfolgt ein Übergang zu dem Schritt 16.3, in dem ein Dateneintrag in die Zustands-Map erfolgt, welcher den für diese Erkennung zuletzt benötigten empfangsseitigen diskriminanten Bezugspegel repräsentiert.

**Fig. 16** veranschaulicht, wie für den speziellen Fall der Erfassung von Bezugspotentialfehlern bezüglich einer systemweit ausgedehnten Äquipotentialschiene GND definierte Bedingungen bei einem Teilnehmer herstellbar sind.

Ein Systemteilnehmer ECU enthält eine Elektronik 16.1, welche mit dem Bus BUS_H/BUS_L verbunden ist und gegen besagte Äquipotentialschien GND aus einem Potential +V_{B} betriebsstromversorgt wird. Vorliegend liegt im Strompfad zum Potential GND ein zu überwachender bzw. zu prüfender Leitungs- oder Übergangswiderstand, mit Potentialfehlerversatzwirkung in Bezug auf den Teilnehmer ECU über GND. Bestandteil der Elektronik 16.1 ist ein Lastschaltelement 16.3, über welches beispielsweise ein vom Teilnehmer ECU mitumfaßter Stromverbraucher 16.4, etwa eine Stromquelle oder einen Testlastwiderstand, nach Maßgabe einer Anforderung über den Bus BUS_H/BUS_L kurze Zeit einschaltbar ist. Im Falle einer Stromquelle kann es sich gleichwohl um eine gesteuerte handeln, welche die Funktion von 16.3 und 16.4 dann quasi integriert enthält. Auf diese Weise ist es möglich, für die Dauer der Ansteuerung des Lastschaltelements 16.3 einen erhöhten Massestrom zur Äquipotentialschiene GND fließen zu lassen. Alternativ dazu ist auch die Betriebsansteuerung einer vom Teilnehmer ECU nach Masse GND stromversorgten externen Betriebslast möglich. Da ein so bewirkter Stromfluß zur Äquipotentialschiene GND (bei fehlender Stromquelleneigenschaft des Stromverbrauchers bzw. einer externen Betriebslast) vom Widerstand 16.2 abhängen kann, kann es sich in besonderen Fällen als zweckmäßig erweisen, auch die außen am Teilnehmer ECU anliegende Betriebsspannung oder eine daraus abgeteilte Spannung U_{PLT} in der Elektronik 16.1 zu diskriminieren oder zu prüfen bzw. überprüfen oder zu messen und diesbezüglich entsprechende Zustands-Daten zu erzeugen und in der wenigstens einen Zustands-Map SMP abzulegen und/oder zu verarbeiten und/oder auszuwerten. Wesentlich dabei ist, daß diese Spannung innerhalb des Teilnehmers ECU vom Potential +V_{B} aus nicht durch Regelung gewonnen wird, da sie ansonsten als Referenzspannung für Plausibilitätsbewertungszwecke in der Zustands-Map nicht verwertbar ist.

Mit den vorbeschriebenen Vorgehensweisen können Potentialverschiebungen verschiedener Teilnehmer des vernetzten Systems gegeneinander festgestellt werden. Wenn die Potentialverschiebungen mehrerer Teilnehmer verglichen werden, können dabei sicherer Aussagen über Massefehlerprobleme einzelner Teilnehmer gemacht werden. Wenn beispielsweise mehrere Datenempfänger gegenüber einem Datensender eine Potentialverschiebung aufweisen, so kann beispielsweise aus der Zustands-Map geschlossen werden, daß der Datensender eine Potentialverschiebung gegenüber den Datenempfängern aufweist und nicht umgekehrt. Für solche Feststellungen können besonders vorteilhaft mehrere Teilnehmer im Netz mit Witness- oder Approver-Funktion im Hinblick auf die Zustands-Map beteiligt werden.

Beschriebenermaßen ist das erfindungsgemäße Verfahren auch für die Früherkennung allfällig anderer die Kommunikation innerhalb des vernetzten Systems beeinträchtigender und insoweit die Verfügbarkeit des Systems in Frage stellender Fehler geeignet. Vorteilhaft wird die bzw. wenigstens eine Zustands-Map in einem Teilnehmer oder es werden mehrere in mehreren Teilnehmern des vernetzten Systems geführt bzw. betrieben und/oder gespeichert. Die Zustands-Map kann vorteilhaft von einem Prüfgerät ausgelesen werden, das an das vernetzte System anschließbar ist. Es ist dann frühzeitig möglich, in Entstehung begriffene Fehler zu beheben, bevor es zu Funktionsstörungen im vernetzten System kam.

Bezüglich figürlich nicht illustrierter Weiterbildungen der vorbeschriebenen Verfahrensdetails wird auf die Merkmalsbeschreibung und -Erläuterung in der ausführliche Beschreibungseinleitung sowie verständnishalber auf die eingangs erwähnten Schriften **[1]** bis **[4]** verwiesen.

## Patentansprüche

1. Verfahren zur Prüfung und Sicherung der Verfügbarkeit eines einem Systemträger zugeordneten, vernetzten Systems, in welchem eine Mehrzahl von Teilnehmern über ein aus einer oder mehreren Leitungen bestehendes Busnetz Daten austauschen, wobei zumindest einzelne Teilnehmer Daten über die Leitung bzw. die Leitungen senden, indem die Leitung bzw. die Leitungen von den entsprechenden Teilnehmern mit bestimmten Spannungspegeln beaufschlagt wird bzw. werden und wobei die Daten in wenigstens einem empfangenden Teilnehmer anhand von Spannungspegeln ausgewertet werden, indem die Leitung bzw. die Leitungen von dem wenigstens einen empfangenden Teilnehmer auf das Über- bzw. Unterschreiten von Spannungspegeln überwacht wird bzw. werden,
**dadurch gekennzeichnet,**
daß auf dem Busnetz (BUS_H, BUS_L) anstehende Signale unter netzweit für alle Teilnehmer (ECU1 bis ECU8) definierten Bedingungen von einzelnen Teilnehmern während des Betriebs des Systems bezüglich wenigstens eines Signalkriteriums diskriminiert oder geprüft oder gemessen (11.7) werden, wobei jeweils für jedes Signalkriterium bezüglich eines jeden Teilnehmers charakteristische Zustands-Daten erzeugt und in wenigstens einer Zustands-Map (SMP) des Systems gesammelt und angeordnet (11.9) werden, wobei diese Zustands-Daten sowohl den aktuellen als auch wenigstens einen früheren Zustand hinsichtlich der geprüften Teilnehmer (ECU1 bis ECU8) bezüglich des wenigstens einen Kriteriums charakterisieren, und daß aus diesen Zustands-Daten wenigstens ein Fehlerabstandsmaß des vernetzten Systems bezüglich des wenigstens einen Kriteriums gewonnen (11.11) wird.

2. Verfahren zur Prüfung und Sicherung der Verfügbarkeit eines einem Systemträger zugeordneten, vernetzten Systems, wobei Teilnehmer dieses Netzes über eine oder mehrere Leitungen Daten austauschen, wobei zumindest einzelne Teilnehmer Daten über Leitung bzw. die Leitungen senden, indem die Leitung bzw. die Leitungen von den entsprechenden Teilnehmern mit bestimmten Spannungspegeln beaufschlagt wird/werden und wobei die Daten durch zumindest einen Teilnehmer anhand von Spannungspegeln ausgewertet werden, indem die Leitung bzw. die Leitungen von dem zumindest einen Teilnehmer auf das Über- bzw. Unterschreiten von Spannungspegeln überwacht werden,
**dadurch gekennzeichnet,**
daß die Funktionsfähigkeit von Daten empfangenden Teilnehmern (ECU) überprüft wird, indem Signale mit einem gegenüber dem normalen Senden von Daten verschobenen Spannungspegel gesendet werden (13.2), indem weiterhin überprüft wird, bei welchem Maße der Verschiebung (Uₛ) dieses Spannungspegels zumindest einzelne Teilnehmer keine Daten mehr empfangen können (13.1) und daß wenigstens eine Zustands-Map (SMP) angelegt wird, in der - bezogen auf die einzelnen Daten empfangenden Teilnehmer - in Form von Zustands-Daten gespeichert (B) wird, bei welcher Verschiebung (Uₛ) besagten Spannungspegels zumindest einzelne Teilnehmer keine Daten mehr empfangen können (13.3) und/oder bei welcher (weiteren) Verschiebung besagten Spannungspegels welcher bzw. welche Teilnehmer als letzte bzw. letzter noch Daten empfangen können bzw. kann.

3. Verfahren zur Prüfung und Sicherung der Verfügbarkeit eines einem Systemträger zugeordneten, vernetzten Systems, wobei Teilnehmer dieses Netzes über eine oder mehrere Leitungen Daten austauschen, wobei zumindest einzelne Teilnehmer Daten über die Leitung bzw. die Leitungen senden, indem die Leitung bzw. die Leitungen von den entsprechenden Teilnehmern mit bestimmten Spannungspegeln beaufschlagt wird/werden und wobei die Daten durch zumindest einen Teilnehmer anhand von Spannungspegeln ausgewertet werden, indem die Leitung bzw. die Leitungen von dem zumindest einen Teilnehmer auf das Über- bzw. Unterschreiten von Spannungspegeln überwacht werden,
**dadurch gekennzeichnet,**
daß die Funktionsfähigkeit von Daten sendenden Teilnehmern (ECU; ECU1 bis ECU 8) überprüft wird, indem Signale von zumindest einem Daten sendenden Teilnehmer ausgesendet werden, indem weiterhin überprüft wird, inwieweit der Pegel der empfangenden Signale von dem Sollwert ("N") des Signalpegels beim normalen Senden von Daten abweicht, und daß wenigstens eine Zustands-Map (SMP) angelegt wird, in der bezogen auf die einzelnen Daten sendenden Teilnehmer ein Maß für die ermittelte Abweichung gespeichert wird.

4. Verfahren nach Anspruch 2,
**dadurch gekennzeichnet,**
daß die Signale mit einem gegenüber dem normalen Senden von Daten verschobenen ("S") Signalpegel von wenigstens einem Teilnehmer (ECU1 bis ECU8) des vernetzten Systems (S) gesendet werden.

5. Verfahren nach Anspruch 3,
**dadurch gekennzeichnet,**
daß die Überprüfung von wenigstens einem Daten empfangenden Teilnehmer (ECU1 bis ECU8) durchgeführt wird.

6. Verfahren gemäß Anspruch 1,
**dadurch gekennzeichnet,**
daß aus diesen Zustands-Daten das kleinste Fehlerabstandsmaß unter einzelnen Teilnehmern bezüglich des wenigstens einen Kriteriums gewonnen und der betreffende Teilnehmer in der Zustands-Map (SMP) entsprechend markiert (11.12) wird.

7. Verfahren gemäß Anspruch 1, 2 oder 3,
**dadurch gekennzeichnet,**
daß das Verfahren anläßlich der normalen Inbetriebnahme und/oder normalen Außerbetriebsetzung des Systemträgers durchgeführt wird.

8. Verfahren gemäß Anspruch 1, 2 oder 3,
**dadurch gekennzeichnet,**
daß das Verfahren im Verlaufe eines jeden Betriebes des Systems wiederholt durchgeführt wird.

9. Verfahren gemäß Anspruch 1 oder 6,
**dadurch gekennzeichnet,**
daß das diskriminierte oder geprüfte oder gemessene (11.7) Signalkriterium ein Anstiegszeitmaß, ein Überschwingmaß oder ein Beruhigungszeitmaß eines Datensignals bei bzw. nach dessen Zustandsänderung ist.

10. Verfahren gemäß Anspruch 1 oder 6,
**dadurch gekennzeichnet,**
daß als das wenigstens eine Signalkriterium ein Bezugspotential einzelner Teilnehmer im vernetzten System diskriminiert oder geprüft oder gemessen wird.

11. Verfahren gemäß Anspruch 10,
**dadurch gekennzeichnet,**
daß die Diskrimination oder Prüfung oder Messung (11.7) besagten Bezugspotentials einzelner Teilnehmer (ECU1 bis ECU8) im vernetzten System (S) durch Erfassung wenigstens eines rezessiven oder dominanten Signalpegels in einzelnen Teilnehmern unter jeweils definierten Ruhe- und/oder Betriebs- oder Testlastbedingungen (16.3, 16.4) einzelner Teilnehmer erfolgt.

12. Verfahren gemäß Anspruch 10,
**dadurch gekennzeichnet,**
daß die Diskrimination oder Prüfung oder Messung (11.7) durch datensignalverkettetes Sampeln (2011L, 2010L) des Potentials auf dem wenigstens einen Busdraht (BUS_L) binnen einer Abtastdauer erfolgt, welche kürzer als die Busbitzeit des Datensignals (TxD) auf dem wenigstens einen Busdraht (BUS_L) ist.

13. Verfahren gemäß Anspruch 10,
**dadurch gekennzeichnet,**
daß eine Bezugspotentialabweichung bei wenigstens einem empfangenden Teilnehmer (ECU1 bis ECU8) im vernetzten System (S) erfaßt wird und zwecks dieser Erfassung eine Diskrimination oder Messung (11.7) in diesem Teilnehmer wenigstens eines auf wenigstens eine Leitung (BUS_H und/ oder BUS_L) des Busnetzes BUS_H, BUS_L) eingespeisten dominanten Quellenpegels erfolgt, wobei der jeweils eingespeiste dominante Quellenpegel gegenüber dem normalen dominanten Signalpegel in jeweils vorbestimmter Weise versetzt (U_{S}) wird und in der Zustands-Map (SMP) in Abhängigkeit von dem im empfangenden Teilnehmer gewonnenen Diskriminations- oder Meßergebnis der jeweilige Versatz in Form von Zustands-Daten abgelegt wird.

14. Verfahren gemäß Anspruch 10,
**dadurch gekennzeichnet,**
daß eine Bezugspotentialabweichung bei wenigstens einem sendenden Teilnehmer (ECU1 bis ECU8) im vernetzten System (S) erfaßt wird und zwecks dieser Erfassung eine Diskrimination oder Messung (11.7) wenigstens eines auf wenigstens eine Leitung (BUS_H und/oder BUS_L) des Busnetzes (BUS_H, BUS,L) von diesem Teilnehmer eingespeisten dominanten Signalpegels erfolgt, indem'bei oder in wenigstens einem empfangenden Teilnehmer ein empfangsdiskriminanter Bezugspegel in jeweils vorbestimmter Weise versetzt wird und in der Zustands-Map (SMP) in Abhängigkeit von dem im empfangenden Teilnehmer gewonnenen Diskriminations- oder Meßergebnis der jeweilige Versatz in Form von Zustands-Daten abgelegt wird.

15. Verfahren gemäß Anspruch 1, 2, 3, 6, 11, 13 oder 14,
**dadurch gekennzeichnet,**
daß eine Diskrimination oder Prüfung oder Messung bzw. Überprüfung (11.7) bezüglich eines bestimmten Teilnehmers jeweils durch wenigstens zwei andere Teilnehmer im Netz vorgenommen wird (Witness-Funktion).

16. Verfahren gemäß Anspruch 1, 2, 3, 11, 13 oder 14,
**dadurch gekennzeichnet,**
daß eine Diskrimination oder Prüfung oder Messung bzw. Überprüfung (11.7) bezüglich eines bestimmten Teilnehmers identisch auch bezüglich wenigstens eines weiteren Vergleichsteilnehmers vorgenommen und eine Plausibilitätsauswahl in der Zustands-Map (SMP) bezüglich des Ergebnisses getroffen wird (Approver-Funktion).

17. Verfahren gemäß Anspruch 13,
**dadurch gekennzeichnet,**
daß Datensignale mit wenigstens einem gegenüber dem normalen dominanten Signalpegel versetzten dominanten Quellenpegel von wenigstens einem Teilnehmer (ECU1 bis ECU8) des vernetzten Systems (S) ins Busnetz (BUS_H, BUS_L) gesendet werden.

18. Verfahren gemäß Anspruch 13 oder 14,
**dadurch gekennzeichnet,**
daß die Diskrimination oder Messung (11.7) des wenigstens einen auf wenigstens eine Leitung (BUS_H und/oder BUS_L) des Busnetzes (BUS_H, BUS_L) eingespeisten dominanten Quellen- bzw. Signalpegels in wenigstens einem empfangenden Teilnehmer (ECU1 bis ECU8) erfolgt und hierfür von diesem umfaßte Mittel zur Überwachung der Leitung bzw. Leitungen auf das Über- bzw. Unterschreiten von Spannungspegeln zwecks Datenempfang genutzt werden.

19. Verfahren gemäß Anspruch 1, 2, 3 oder 11,
**dadurch gekennzeichnet,**
daß die Diskrimination oder Prüfung bzw. Überprüfung oder Messung (11.7) unter netzweit definierten Ruhe- und/oder Betriebs- oder Testlastbedingungen einzelner Teilnehmer erfolgt.

20. Verfahren gemäß Anspruch 1, 2 oder 3,
**dadurch gekennzeichnet,**
daß die wenigstens eine Zustands-Map (SMP) in wenigstens einem dem vernetzten System (S) dauerhaft zugehörigen Teilnehmer betrieben wird.

21. Verfahren gemäß Anspruch 1, 2 oder 3,
**dadurch gekennzeichnet,**
daß eine nichtflüchtige Speicherung der wenigstens einen Zustands-Map (B; SMP) erfolgt.

22. Verfahren gemäß Anspruch 1, 2 oder 3,
**dadurch gekennzeichnet,**
daß die wenigstens eine Zustands-Map (SMP) bezüglich darin gehaltener (B1 bis B4) Inhaltsteile fortlaufend aktualisiert bzw. fortgeschrieben (11.9; 11.12) wird, indem ältere Inhaltsteile durch neuere Inhaltsteile überschrieben werden.

23. Verfahren gemäß Anspruch 1, 2 oder 3,
**dadurch gekennzeichnet,**
daß (die) wenigstens einen früheren Systemzustand charakterisierende Zustands-Daten zumindest vorübergehend zusammen mit (den) den aktuellen Systemzustand charakterisierenden Zustands-Daten in der wenigstens einen Zustands-Map (SMP) gehalten werden.

24. Verfahren gemäß Anspruch 1, 2 oder 3,
**dadurch gekennzeichnet,**
daß aus in der wenigstens einen Zustands-Map (SMP) wenigstens vorübergehend vorhandenen, den aktuellen und wenigstens einen früheren Systemzustand charakterisierenden Zustands-Daten wenigstens eine Trendgröße (11.11) bezüglich der tendentiellen Entwicklung der besagten Abweichung bzw. des besagten Fehlerabstandsmaßes des wenigstens einen Signalkriteriums im System abgeleitet (in C2) wird.

25. Verfahren gemäß Anspruch 24,
**dadurch gekennzeichnet,**
daß die Ableitung der Trendgröße (11.11; in C2) vermittels der Software zum Betreiben des vernetzten Systems vorgenommen wird.

26. Verfahren gemäß Anspruch 1, 2, 3, 6 oder 24,
**dadurch gekennzeichnet,**
daß die Abweichung bzw. Verschiebung **und/oder** das Fehlerabstandsmaß und/oder die wenigstens eine Trendgröße in der Zustands-Map (SMP) nichtflüchtig gehalten wird/ werden.

27. Verfahren gemäß Anspruch 1, 2 oder 3,
**dadurch gekennzeichnet,**
daß die Diskrimination oder Prüfung bzw. Überprüfung oder Messung (11.7) und wenigstens eines von Sammlung, Aufbereitung, Anordnung (B) und Auswertung (C) von Zustands-Daten in der Zustands-Map (SMP) durch ein mit der bzw. in die Software zum Betreiben des vernetzten Systems (S) integriertes und hinsichtlich seiner Durchführung dem normalen Netzbetrieb unterlagertes und insoweit latent ablaufendes Online-Diagnoseprogramm vorgenommen wird.

28. Verfahren nach einem der vorhergehenden Ansprüche,
**dadurch gekennzeichnet,**
daß an das vernetzte System (S) als weiterer Teilnehmer ein Prüfgerät (ETU) angeschlossen wird und von diesem wenigstens Teile der wenigstens einen Zustands-Map (SMP) ausgelesen werden.

29. Verfahren gemäß Anspruch 1, 2, 3, 6 oder 24,
**dadurch gekennzeichnet,**
daß wenigstens ein dem System dauerhaft zugehöriger Teilnehmer (ECU7) mit Anzeige- und/oder Signaleinrichtungen (AD) ausgestattet ist und daß bei Überschreitung eines Grenzwertes für das Maß der Abweichung bzw. Verschiebung bzw. bei Unterschreitung eines Grenzwertes für das wenigstens eine Fehlerabstandsmaß oder die Trendgröße dieser Zustand von dem Teilnehmer angezeigt bzw. signalisiert wird.

30. Verfahren nach wenigstens einem der vorherigen Ansprüche,
**dadurch gekennzeichnet,**
daß Teile der in der Zustands-Map (SMP) abgelegten Zustands-Daten und/oder das Maß der Abweichung bzw. ein Fehlerabstandsmaß des Systems oder eines Teilnehmers und/oder die wenigstens eine Trendgröße in ein elektronisches Autorisationsmittel zur Benutzung bzw. zur Inbetriebnahme des Systemträgers eingeschrieben werden.

31. Verfahren gemäß Anspruch 7,
**dadurch gekennzeichnet,**
daß nach der Inbetriebnahme und Initialisierung des vernetzten Systems (S) sofort eine erste Diskrimination oder Prüfung bzw. Überprüfung oder Messung vorgenommen wird, und daß hierbei selektiv eine geringere Zahl von Teilnehmern und/oder eine geringere Zahl von Signalkriterien der Diskrimination oder Prüfung oder Messung unterworfen wird bzw. werden als bei der anschließenden Weiterführung des Verfahrens (Startup-Outmasking).

32. Verfahren nach wenigstens einem der vorherigen Ansprüche,
**dadurch gekennzeichnet,**
daß wenigstens zwei Zustands-Maps (SMP1, SMP2) in zwei verschiedenen Teilnehmern (ECU4, ECU8) vorgesehen und verwendet werden.

33. Verfahren nach wenigstens einem der vorherigen Ansprüche,
**dadurch gekennzeichnet,**
daß im System zwei verschiedene Zustands-Maps (SMP1, SMP2) vorgesehen werden, welche für unterschiedliche Prüfverfahren und/oder -programme jeweils voneinander unabhängig verändert und/oder bearbeitet und/oder ausgelesen werden.

34. Verfahren nach wenigstens einem der vorherigen Ansprüche,
**dadurch gekennzeichnet,**
daß im Zuge der Diskrimination oder Prüfung bzw. Überprüfung oder Messung (11.7) wenigstens einzelne Teilnehmer (ECU1 BIS ECU8) jeweils wenigstens einen teilnehmerexternen elektrischen Verbraucher mit Betriebsstrom versorgen.

35. Verfahren nach wenigstens einem der vorherigen Ansprüche,
**dadurch gekennzeichnet,**
daß wenigstens in einzelnen Teilnehmern des Systems (ECU; ECU1 BIS ECU8) eine über das Busnetz (BUS_H, BUS_L) im Sinne einer Bestromung ansteuerbare Prüflast (16.4) vorgesehen ist und daß im Zuge der Diskrimination oder Prüfung bzw. Überprüfung oder Messung (11.7) dieselbe angesteuert wird.

36. Verfahren nach wenigstens einem der vorherigen Ansprüche,
**dadurch gekennzeichnet,**
daß auch die innerhalb Teilnehmern (ECU; ECU1 bis ECU8) erfaßbare, außen anliegende Betriebsspannung (V_{B}) oder eine daraus abgeteilte Spannung (U_{PLT}) diskriminiert oder geprüft bzw. überprüft oder gemessen wird und daß diesbezüglich Zustands-Daten erzeugt und in der wenigstens einen Zustands-Map (SMP) abgelegt und/oder verarbeitet und/oder ausgewertet werden.

37. Verfahren gemäß Anspruch 1, 2 oder 3,
**dadurch gekennzeichnet,**
daß wenigstens eine Zustands-Map umfaßt:
- einen Teilnehmer-Identifikationsabschnitt (A),
- ein Zustands-Daten-Stack (B) und
- einen Datenbearbeitungsabschnitt C.

38. Verfahren gemäß Anspruch 37,
**dadurch gekennzeichnet,**
daß der Identifikationsabschnitt (A) eine Tabelle (A1) umfaßt, über die jedem System-Identifier und/oder Teilnehmer im System bedarfsweise seine topologische Identifikation bzw. ein topologischer Identifier innerhalb des Netzes zugeordnet wird.

39. Verfahren gemäß Anspruch 37,
**dadurch gekennzeichnet,**
daß das Datenstack (B) eine der Anzahl zu prüfender Signalkriterien entsprechende Mehrzahl von Registerstacks (B1 bis B4) umfaßt, in welchen bzw. durch welche hindurch Zustands-Daten entsprechend ihrem Altersfortschritt routbar sind.

40. Verfahren gemäß Anspruch 37,
**dadurch gekennzeichnet,**
daß der Datenbearbeitungsabschnitt (C) wenigstens einen Bereich zur Datenselektion (C1) und einen Bereich zur Datenbearbeitung (C2) aufweist, wobei in ersterem Zustands-Daten wenigstens nach Minimal- und Maximalwerten selektierbar und/oder umordenbar und wobei in letzterem aus Zustands-Daten in Abhängigkeit von ihrem Alter und/ oder zeitlichen Anfall veränderungsindikative Daten erzeugbar sind.

41. Verfahren nach wenigstens einem der vorherigen Ansprüche,
**dadurch gekennzeichnet,**
daß es bei einem Verkehrsmittel durchgeführt wird.

## Claims

1. Method for testing and safeguarding the availability of a networked system assigned to a system carrier, in which a multiplicity of subscribers exchange data via a bus-type network comprising one or more lines, at least individual subscribers transmitting data via the line or the lines by virtue of the fact that specific voltage levels are applied to the line or the lines by the appropriate subscribers, and the data being evaluated in at least one receiving subscriber with the aid of voltage levels by virtue of the fact that the line or the lines is or are monitored by the at least one receiving subscriber for the overshooting or undershooting of voltage levels, characterized in that during operation of the system signals present on the bus-type network (BUS_H, BUS_L) are discriminated or tested or measured (11.7) with respect to at least one signal criterion by individual subscribers under conditions defined in a network-wide fashion for all subscribers (ECU1 to ECU8), characteristic status data being generated in each case for each signal criterion with respect to each subscriber and being collected and arranged (11.9) in at least one status map (SMP) of the system, these status data characterizing both the current and at least one earlier status with regard to the tested subscribers (ECU1 to ECU8) with respect to the at least one criterion, and in that at least one measure of the margin of error of the networked system with respect to the at least one criterion is obtained (11.11) from these status data.

2. Method for testing and safeguarding the availability of a networked system assigned to a system carrier, subscribers of this network exchanging data via one or more lines, at least individual subscribers transmitting data via the line or the lines by virtue of the fact that specific voltage levels are applied to the line or the lines by the appropriate subscribers, and the data being evaluated by at least one subscriber with the aid of voltage levels by virtue of the fact that the line or the lines is or are monitored by the at least one subscriber for the overshooting or undershooting of voltage levels, characterized in that the operability of data-receiving subscribers (ECU) is checked by virtue of the fact that signals are transmitted (13.2) at a voltage level which is displaced by comparison with the normal transmission of data and, furthermore, it is checked at which measure of the displacement (Uₛ) of this voltage level at least individual subscribers can no longer receive data (13.1), and in that at least one status map (SMP) is drawn up in which it is stored (B) - with reference to the individual data-receiving subscribers - in the form of status data at which displacement (Uₛ) of said voltage level at least individual subscribers can no longer receive data (13.2) and/or at which (further) displacement of said voltage level which subscriber or subscribers can, as a last one or ones, still receive data.

3. Method for testing and safeguarding the availability of a networked system assigned to a system carrier, subscribers of this network exchanging data via one or more lines, at least individual subscribers transmitting data via the line or the lines by virtue of the fact that specific voltage levels are applied to the line or the lines by the appropriate subscribers, and the data being evaluated by at least one subscriber with the aid of voltage levels by virtue of the fact that the line or the lines is or are monitored by the at least one subscriber for the overshooting or undershooting of voltage levels, characterized in that the operability of data-transmitting subscribers (ECU; ECU1 to ECU8) is checked by virtue of the fact that signals are transmitted by at least one data-transmitting subscriber and, furthermore, it is checked to what extent the level of the received signals deviates from the desired value ("N") of the signal level in the case of normal transmission of data, and in that at least one status map (SMP) is drawn up in which a measure of the deviation determined is stored with reference to the individual data-transmitting subscribers.

4. Method according to Claim 2, characterized in that the signals are transmitted by at least one subscriber (ECU1 to ECU8) of the networked system (S) at a signal level displaced ("S") by comparison with the normal transmission of data.

5. Method according to Claim 3, characterized in that the checking is carried out by at least one data-receiving subscriber (ECU1 to ECU8).

6. Method according to Claim 1, characterized in that the smallest measure of the margin of error among individual subscribers is obtained with respect to the at least one criterion from these status data, and the relevant subscriber is marked (11.12) correspondingly in the status map (SMP).

7. Method according to Claim 1, 2 or 3, characterized in that the method is carried out on the occasion of the normal commissioning and/or normal decommissioning of the system carrier.

8. Method according to Claim 1, 2 or 3, characterized in that the method is repeatedly carried out in the course of each operation of the system.

9. Method according to Claim 1 or 6, characterized in that the discriminated or tested or measured (11.7) signal criterion is a rise time measure, an overshoot measure or a settling time measure of a data signal during or after a change in status thereof.

10. Method according to Claim 1 or 6, characterized in that a reference-earth potential of individual subscribers in the networked system is discriminated or tested or measured as the at least one signal criterion.

11. Method according to Claim 10, characterized in that discriminating or testing or measuring (11.7) of said reference-earth potential of individual subscribers (ECU1 to ECU8) in the networked system (S) is performed by detecting at least one recessive or dominant signal level in individual subscribers under respectively defined quiescent conditions and/or operating conditions or test load conditions (16.3, 16.4) of individual subscribers.

12. Method according to Claim 10, characterized in that the discriminating or testing or measuring (11.7) is performed by sampling (2011L, 2010L), by data signal concatenation, the potential on the at least one bus wire (BUS_L) within a sampling time which is shorter than the bus bit time of the data signal (TxD) on the at least one bus wire (BUS_L).

13. Method according to Claim 10, characterized in that a reference-earth potential deviation is detected in the case of at least one receiving subscriber (ECU1 to ECU8) in the networked system (S), and for the purpose of this detection a discrimination or measurement (11.7) is performed in this subscriber of at least one dominant source level fed onto at least one line (BUS_H and/or BUS_L) of the bus-type network (BUS_H, BUS_L), the respectively fed dominant source level being offset (Uₛ) with respect to the normal dominant signal level in a respectively predetermined way, and the respective offset being stored in the form of status data in the status map (SMP) as a function of the discrimination result or measurement result obtained in the receiving subscriber.

14. Method according to Claim 10, characterized in that a reference-earth potential deviation is determined in the case of at least one transmitting subscriber (ECU1 to ECU8) in the networked system (S), and for the purpose of this detection a discrimination or measurement (11.7) is performed of at least one dominant signal level fed onto at least one line (BUS_H and/or BUS_L) of the bus-type network (BUS_H, BUS_L) by this subscriber by virtue of the fact that a reception-discriminant reference level is offset in a respectively predetermined way in the case of or in at least one receiving subscriber, and the respective offset is stored in the form of status data in the status map (SMP) as a function of the discrimination result or measurement result obtained in the receiving subscriber.

15. Method according to Claim 1, 2, 3, 6, 11, 13 or 14, characterized in that discriminating or testing or measuring or checking (11.7) with respect to a specific subscriber is undertaken in each case by at least two other subscribers in the network (witness function).

16. Method according to Claim 1, 2, 3, 11, 13 or 14, characterized in that discriminating or testing or measuring or checking (11.7) with respect to a specific subscriber is undertaken identically with respect to at least one further comparison subscriber as well, and a plausibility selection is made in the status map (SMP) with respect to the result (approver function).

17. Method according to Claim 13, characterized in that data signals having at least one dominant source level offset with respect to the normal dominant signal level are transmitted into the bus-type network (BUS_H, BUS_L) by at least one subscriber (ECU1 to ECU8) of the networked system (S).

18. Method according to Claim 13 or 14, characterized in that the discrimination or measuring (11.7) of the at least one dominant source level or signal level fed onto at least one line (BUS_H and/or BUS_L) of the bus-type network (BUS_H, BUS_L) is performed in at least one receiving subscriber (ECU1 to ECU8), and to this end use is made, for the purpose of data reception, of means, included in said subscriber, for monitoring the line or lines for the overshooting or undershooting of voltage levels.

19. Method according to Claim 1, 2, 3 or 11, characterized in that the discriminating or testing or checking or measuring (11.7) is performed under network-wide defined quiescent conditions and/or operating conditions or test load conditions of individual subscribers.

20. Method according to Claim 1, 2 or 3, characterized in that the at least one status map (SMP) is operated in at least one subscriber permanently belonging to the networked system (S).

21. Method according to Claim 1, 2 or 3, characterized in that the at least one status map (B; SMP) is stored in a non-volatile fashion.

22. Method according to Claim 1, 2 or 3, characterized in that with respect to the parts of the contents which the at least one status map (SMP) holds (B1 to B4), the latter is continuously updated (11.9; 11.12) by overwriting older parts of the contents with newer parts of the contents.

23. Method according to Claim 1, 2 or 3, characterized in that (the) status data characterizing at least one earlier system status are held at least temporarily in the at least one status map (SMP) together with (the) status data characterizing the current system status.

24. Method according to Claim 1, 2 or 3, characterized in that at least one trend variable (11.11) is derived (in C2) with respect to the tendential development of the said deviation or of the said measure of the margin of error of the at least one signal criterion in the system from status data which are at least temporarily present in the at least one status map (SMP) and characterize the current and at least one earlier system status.

25. Method according to Claim 24, characterized in that the derivation of the trend variable (11.11; in C2) is undertaken by means of the software for operating the networked system.

26. Method according to Claim 1, 2, 3, 6 or 24, characterized in that the deviation or displacement and/or the measure of the margin of error and/or the at least one trend variable is/are held in a non-volatile fashion in the status map (SMP).

27. Method according to Claim 1, 2 or 3, characterized in that the discriminating or testing or checking or measuring (11.7) and at least one of the operations of collecting, conditioning, arranging (B) and evaluating (C) status data in the status map (SMP) are undertaken by an online diagnostic program which is integrated into the software for operating the networked system (S) and, with regard to its execution, is subordinate to the normal network operation and to that extent runs in a latent fashion.

28. Method according to one of the preceding claims, characterized in that there is connected as a further subscriber to the networked system (S) a test instrument (ETU) which reads out at least parts of the at least one status map (SMP).

29. Method according to Claim 1, 2, 3, 6 or 24, characterized in that at least one of the subscribers (ECU7) permanently belonging to the system is fitted with display devices and/or signalling devices (AD), and in that given overshooting of a limiting value for the measure of the deviation or displacement, or given undershooting of a limiting value for the at least one measure of the margin of error or the trend variable, this status is indicated or signalled by the subscriber.

30. Method according to at least one of the preceding claims, characterized in that parts of the status data stored in the status map (SMP) and/or the measure of the deviation or a measure of the margin of error of the system or of a subscriber, and/or the at least one trend variable are written into an electronic authorization means for using and/or for commissioning the system carrier.

31. Method according to Claim 7, characterized in that after the commissioning and initialization of the networked system (S) a first discrimination or testing or checking or measuring is undertaken immediately, and in that in this process a smaller number of subscribers and/or a smaller number of signal criteria are selectively subjected to being discriminated or tested or measured than in the case of the subsequent further conduct of the method (startup outmasking).

32. Method according to at least one of the preceding claims, characterized in that at least two status maps (SMP1, SMP2) are provided and used in two different subscribers (ECU4, ECU8).

33. Method according to at least one of the preceding claims, characterized in that provided in the system are two different status maps (SMP1, SMP2) which are changed and/or processed and/or read out independently of one another in each case for different test methods and/or test programs.

34. Method according to at least one of the preceding claims, characterized in that in the course of discriminating or testing or checking or measuring (11.7), at least individual subscribers (ECU1 to ECU8) respectively supply operating currents to at least one electrical consumer external to the subscriber.

35. Method according to at least one of the preceding claims, characterized in that a test load (16.4) which can be driven via the bus-type network (BUS_H, BUS_L) for the purpose of providing current is provided at least in individual subscribers of the system (ECU1 to ECU8), and in that said load is driven in the course of discriminating or testing or checking or measuring (11.7).

36. Method according to at least one of the preceding claims, characterized in that the external operating voltage (V_{B}), which can be detected inside subscribers (ECU; ECU1 to ECU8), or a voltage (U_{PLT}) derived therefrom is also discriminated or tested or checked or measured, and in that with respect to this status data are generated and stored and/or processed and/or evaluated in the at least one status map (SMP).

37. Method according to Claim 1, 2 or 3, characterized in that at least one status map comprises:
- a subscriber identification section (A),
- a status data stack (B) and
- a data processing section (C).

38. Method according to Claim 37, characterized in that the identification section (A) comprises a table (A1) via which each system identifier and/or subscriber in the system is assigned as required its topological identification or a topological identifier within the network.

39. Method according to Claim 37, characterized in that the data stack (B) comprises a multiplicity, corresponding to the number of signal criteria to be tested, of register stacks (B1 to B4) in which or through which it is possible to route status data in accordance with their ageing progress.

40. Method according to Claim 37, characterized in that the data processing section (C) has at least one area for data selection (C1) and one area for data processing (C2), it being the case that status data can be selected and/or reorganized in the former at least in terms of minimum and maximum values, and data indicative of change can be generated in the latter from status data as a function of their age and/or temporal occurrence.

41. Method according to at least one of the preceding claims, characterized in that it is carried out in the case of a transport means.

## Revendications

1. Procédé de contrôle et de sécurisation de la disponibilité d'un système en réseau, associé à un support de système, dans lequel une pluralité de postes échangent des données par l'intermédiaire d'un réseau de bus constitué d'une ou plusieurs lignes, au moins des postes individuels émettant des données par l'intermédiaire de la ligne ou des lignes, par le fait que la ligne ou les lignes est ou sont alimentée(s) avec des niveaux de tension déterminée(s) par les postes correspondants, et les données étant évaluées en au moins un poste récepteur, à l'aide de niveaux de tension, en ce que la ligne ou les lignes est ou sont surveillée(s) par le au moins un poste, quant au dépassement ou à la descente en dessous des niveaux de tension,
caractérisé en ce que
des signaux, s'appliquant sur le réseau de bus (BUS_H, BUS_L), sont discriminés, ou contrôlés, ou mesurés (11.7) quant à au moins un critère de signal, dans des conditions définies, dans tout le réseau, pour tous les postes (ECU1 à ECU8), par des postes individuels pendant le fonctionnement du système, des données d'état caractéristiques étant respectivment générées pour chaque critère de signal, par rapport à chaque poste, et collectées et disposées (11.9) en au moins une carte d'état (SMP) du système, ces données d'état caractérisant tant l'état actuel, qu'également au moins un état antérieur du point de vue du poste (ECU1 à ECU8) contrôlé, du point de vue du au moins un critère, et en ce que, à partir de ces données d'état, au moins une valeur de rapport signal/bruit, par rapport au au moins un critère, du système en réseau est obtenue (11.11),

2. Procédé de contrôle et de sécurisation de la disponibilité d'un système en réseau, associé à un porteur de systèmes, des postes de ce réseau échangeant des données par une ou plusieurs lignes, au moins des postes individuels envoyant des données par la ligne ou les lignes, par le fait que la ligne ou les lignes est/sont sollicitée(s) par des niveaux de tension déterminés, par les postes correspondants, et les données étant évaluées par au moins un poste, à l'aide de niveaux de tension, par le fait que la ligne ou les lignes sont surveillée(s) par le au moins un poste, quant au déplacement ou à la descente en dessous de niveaux de tension,
caractérisé en ce que,
l'aptitude fonctionnelle de postes (ECU) recevant des données est vérifiée, en ce que des signaux sont envoyés avec un niveau de signal décalé par rapport à l'émission normal de données (13.2), en ce qu'en outre on vérifie pour quelle ampleur de décalage (Uₛ) de ce niveau de signal au moins certains postes spécifiques ne peuvent plus recevoir aucune données (13.1), et en ce qu'au moins une carte d'état (SMP) est appliquée, dans laquelle - en se référant aux différents postes recevant des données - est mémorisé (B) pour quel décalage (Uₛ) dudit niveau de tension au moins certains postes ne peuvent plus recevoir de données (13.3) et/ou pour quel décalage (supplémentaire) dudit niveau de tension, ce ou ces postes peut ou peuvent être le ou les derniers à recevoir encore des données.

3. Procédé de contrôle et de sécurisation de la disponibilité d'un système en réseau, associé à un support de système, des postes de ce réseau échangeant des données par l'intermédiaire d'une ou plusieurs lignes, au moins des postes individuels envoyant des données par la ligne ou les lignes, la ligne ou les lignes étant exposées à des niveaux de tension déterminés par les postes correspondants et les données étant évaluées par au moins un poste, à l'aide de niveaux de tension, la ligne ou les lignes étant surveillée(s) par le au moins un poste, quant au déplacement ou à la descente en dessous de niveaux de tension,
caractérisé en ce que
l'aptitude fonctionnelle des postes (ECU; ECU1 à ECU8) envoyant des données est vérifiée, en ce que des signaux émanant d'au moins un poste envoyant des données sont émis, en ce qu'on vérifie en outre dans quelle mesure le niveau des signaux reçus diffère de la valeur de consigne ("N") du niveau de signal lors d'un envoi normal de données, et en ce qu'est dressée au moins une carte d'état (SMP) dans laquelle, en se référant aux différents postes envoyant des données, une indication quantitative de l'écart ayant été déterminé est mémorisée.

4. Procédé selon la revendication 2, caractérisé en ce que les signaux sont envoyés par au moins un poste (ECU1 à ECU8) du système en réseau, avec un niveau de signal ("S") décalé par rapport à l'envoi normal de données.

5. Procédé selon la revendication 3, caractérisé en ce que le contrôle d'au moins un poste (ECU1 à ECU8) recevant des données est effectué.

6. Procédé selon la revendication 1, caractérisé en ce qu'à partir de ces données d'état, on obtient le plus petit rapport signal-bruit parmi les différents postes, par rapport au moins un critère, et le poste concerné est marqué (11.2) de manière correspondante dans la carte d'état (SMP).

7. Procédé selon la revendication 1, 2 ou 3, caractérisé en ce que le procédé est mis en oeuvre à l'occasion de la mise en service normale et/ou de la mise hors service normale du support de système.

8. Procédé selon la revendication 1, 2 ou 3, caractérisé en ce que le procédé est mis en oeuvre répétitivement au cours de chaque fonctionnement du système.

9. Procédé selon la revendication 1 ou 6, caractérisé en ce que le critère de signal discriminé ou contrôlé ou mesuré (11.7) est un indicateur de temps de montée, un indicateur de temps de sur-oscillation ou un indicateur de temps de mise au repos d'un signal de données, lors de ou après son changement d'état.

10. Procédé selon la revendication 1 ou 6, caractérisé en ce que, à titre de au moins un critère de signal, on discrimine ou contrôle, ou mesure, un potentiel de référence de différents postes dans le système en réseau.

11. Procédé selon la revendication 10, caractérisé en ce que la discrimination ou le contrôle ou la mesure (11.7) dudit potentiel de référence de différents postes (ECU1 à ECU8) dans le système en réseau (S) est effectué(e) par détection d'au moins un niveau de signal récessif ou dominant chez différents postes, dans des conditions chaque fois définies de repos et/ou de fonctionnement et/ou de charge de test (16.3, 16.4) de différents postes,

12. Procédé selon la revendication 10, caractérisé en ce que la discrimination ou le contrôle ou la mesure (11.7) s'effectue par échantillonnage (2011L, 2010L), avec enchaînement des signaux de données, du potentiel sur le au moins un fil de bus (BUS_L), dans les limites d'une période de temps d'exploration, d'une durée inférieure à la durée de bit de bus du signal de données (TxD) sur le au moins un fil de bus (BUS_L).

13. Procédé selon la revendication 10, caractérisé en ce qu'un écart de potentiel de référence, pour au moins un poste (ECU1 à ECUB) en réception dans le système (S) en réseau, est appréhendé et, dans le but de cette détection, est effectuée, chez ce poste, une discrimination ou une mesure (11.7) d'au moins un niveau de source dominant, injecté sur au moins une ligne (BUS_H et/ou BUS_L) du réseau de bus (BUS_H; BUS_L), le niveau de source dominant chaque fois injecté étant décalé par rapport au niveau de signal dominant normal, chaque fois de manière prédéterminée (Us) et, dans la carte d'état (SMP), le décalage respectif étant placé sous la forme de données d'état, en fonction du résultat de discrimination ou de mesure obtenu dans le poste en réception.

14. Procédé selon la revendication 10, caractérisé en ce qu'un écart de potentiel de référence est appréhendé chez au moins un poste (ECU1 à ECU8) en émission dans le système (S) en réseau et, dans le but de cette détection, étant effectuée une discrimination ou une mesure (11.7) d'au moins un niveau de signal dominant injecté par ce poste sur au moins une ligne (BUS_H et/ou BUS_L) du réseau de bus (BUS_H; BUS_L), en ce que, chez un, ou au moins un, poste en réception, un niveau de référence discriminant à la réception est décalé de manière chaque fois prédéterminée et le décalage respectif est placé dans la carte d'état (SMP), en fonction du résultat de discrimination ou de mesure obtenu dans le poste en réception, sous la forme de données d'état.

15. Procédé selon les revendications 1, 2, 3, 6, 11, 13 ou 14, caractérisé en ce qu'une discrimination, ou un contrôle ou une mesure ou une vérification (11.7) est effectué(e) quant à un poste déterminé, chaque fois par au moins deux autres postes dans le réseau (fonction Witness).

16. Procédé selon les revendications 1, 2, 3, 11, 13 ou 14, caractérisé en ce qu'une discrimination ou un contrôle ou une mesure ou une vérification (11.7), concernant un poste déterminé, est effectué(e) de façon identique également quant à au moins un autre poste de comparaison, et une sélection de plausibilité étant faite dans la carte d'état (SMP), quant au résultat (fonction
Approver).

17. Procédé selon la revendication 13, caractérisé en ce que des signaux de données ayant au moins un niveau de source dominant, décalé par rapport au niveau de signal dominant normal, sont envoyés par au moins un poste (ECU1 à ECU8) du système (S) en réseau, dans le réseau de bus (BUS_H, BUS_L).

18. Procédé selon les revendications 13 ou 14, caractérisé en ce que la discrimination ou la mesure (11.7) du au moins un niveau de source et/ou de signal dominant, injecté sur au moins une ligne (BUS_H et/ou BUS_L) du réseau de bus (BUS_H, BUS_L), est effectuée chez au moins un poste (ECU1 à ECU8) en réception et, pour cela, des moyens, englobés par celui-ci, sont utilisés pour la surveillance de la ligne ou des lignes, quant au dépassement ou à la descente au-dessous de niveaux de tension, dans le but d'une réception de données.

19. Procédé selon les revendications 1, 2, 3 ou 11, caractérisé en ce que la discrimination ou le contrôle ou la vérification ou la mesure (11.9) est effectué(e) chez différents postes, dans des conditions de repos et/ou de fonctionnement ou de charge de test, définies dans tout le réseau.

20. Procédé selon les revendications 1, 2 ou 3, caractérisé en ce que la au moins une carte d'état (SMP) est exploitée en au moins un poste appartenant durablement au système (S) mis en réseau.

21. Procédé selon les revendications 1, 2 ou 3, caractérisé en ce qu'on effectue une mise en mémoire non volatile de la au moins une carte d'état (B ; SMP).

22. Procédé selon les revendications 1, 2 ou 3, caractérisé en ce que la au moins une carte d'état (SMP) est actualisée ou complétée (11.9 ; 11.12) de façon continue quant aux éléments (B1 à B4) y étant contenus, en procédant à la surécriture sur des contenus plus anciens, par des contenus plus récents.

23. Procédé selon les revendications 1, 2 ou 3, caractérisé en ce que des (les) données d'état, caractérisant au moins un état antérieur du système, sont conservées dans la au moins une carte d'état (SMP), au moins provisoirement, conjointement avec des (les) données d'état caractérisant l'état de système actuel,

24. Procédé selon les revendications 1, 2 ou 3, caractérisé en ce qu'à partir de données d'état, existant au moins provisoirement dans la au moins une carte d'état (SMP), caractérisant l'état de système actuel et au moins un état de système antérieur, est dérivée (en C2) une grandeur de tendance (11.11), quant au développement tendanciel dudit écart et/ou dudit signal bruit du au moins un critère de signal dans le système.

25. Procédé selon la revendication 24, caractérisé en ce que la dérivée de la grandeur de tendance (11.1 ; en C2) est effectuée au moyen du logiciel servant au fonctionnement du système en réseau.

26. Procédé selon les revendications 1, 2, 3, 6 ou 24, caractérisé en ce que l'écart et/ou le décalage et/ou le rapport signal-bruit et/ou la au moins une grandeur de tendance est/sont conservé(e)s de façon non volatile dans la carte d'état (SMP).

27. Procédé selon les revendications 1, 2 ou 3, caractérisé en ce que la discrimination ou le contrôle ou la vérification ou la mesure (11.7) et au moins une opération, parmi la collecte, la préparation-traitement, l'agencement (B) et l'évaluation (C) de données d'état, dans la carte d'état (SMP), est effectué(e) au moyen d'un programme de diagnostic en ligne, intégré à ou dans le logiciel d'exploitation du système en réseau (S) et placé à un niveau inférieur au fonctionnement en réseau normal du point de vue de son exécution, et se déroulant de cette manière de façon latente.

28. Procédé selon l'une des revendications précédentes, caractérisé en ce qu'au système (S) mis en réseau est raccordé, à titre d'autre poste, ,un appareil de contrôle (ETU) et au moins des parties de la au moins une carte d'état (SMP) étant lues par celui-ci.

29. Procédé selon les revendications 1, 2, 3, 6 ou 24, caractérisé en ce au'au moins un poste (ECU7), appartenant durablement au système, est équipé de dispositifs d'affichage et/ou de signalisation (AD), et en ce que, en cas de dépassement d'une valeur limite quantifiant l'écart et/ou le décalage et/ou, en cas de descente au-dessous d'une valeur limite concernant la au moins une valeur du rapport signal-bruit, ou bien la grandeur de tendance, cet état est affiché et/ou signalé par le poste.

30. Procédé selon au moins l'une des revendications précédentes, caractérisé en ce que des parties des données d'état, placées dans la carte d'état (SMP) et/ou la valeur quantitative de l'écart et/ou un rapport signal-bruitdu système ou d'un poste et/ou la au moins une grandeur de tendance sont enregistré(e)s dans un moyen d'autorisation électronique, pour une utilisation et/ou la mise en service du support de système.

31. Procédé selon la revendication 7, caractérisé en ce que, après la mise en service et l'initialisation du système (S) en réseau est aussitôt effectué(e) une première discrimination ou contrôle et/ou vérification ou mesure, et en ce qu'alors, de façon sélective, un plus faible nombre de postes et/ou un plus faible nombre de critères de signaux sont soumis à la discrimination, ou au contrôle ou à la mesure, que lors de la continuation subséquente du procédé, (Startup-Outmasking).

32. Procédé selon au moins l'une des revendications précédentes, caractérisé en ce qu'au moins deux cartes d'état (SMP1, SMP2) sont prévues et utilisées, chez deux postes (ECU4, ECU8) différents.

33. Procédé selon au moins l'une des revendications précédentes, caractérisé en ce que, dans le système, sont prévues deux cartes d'état (SMP1, SMP2) différentes, qui sont modifiées et/ou traitées et/ou lues, chaque fois indépendamment les unes des autres, pour des procédures et/ou des programmes de contrôle différent(e)s.

34. Procédé selon au moins l'une des revendications précédentes, caractérisé en ce que, au cours de la discrimination ou du contrôle ou de la vérification ou de la mesure (11.7) d'au moins certains postes (ECU1 A ECU8), chaque fois au moins un consommateur électrique, externe au poste est alimenté, en courant de fonctionnement.

35. Procédé selon au moins l'une des revendications précédentes, caractérisé en ce qu'au moins chez certains postes du système (ECU ; ECU1 A ECU8) est prévue une charge de contrôle (16.4) pouvant être commandée par le réseau de bus (BUS_H, BUS_L), dans le sens de son alimentation électrique, et en ce que cette même charge de contrôle est commandée, au cours de la discrimination ou du contrôle et/ou de la vérification ou de la mesure (11.7),

36. Procédé selon au moins l'une des revendications précédentes, caractérisé en ce qu'également la tension de fonctionnement (V_{B}) appliquée extérieurement, pouvant être appréhendée à l'intérieur des postes (ECU ; ECU1 à ECU8), ou bien une tension (U_{PLT}) en étant dérivée, est discriminée ou contrôlée ou vérifiée ou mesurée, et en ce qu'à ce sujet des données d'état sont générées et placées dans la au moins une carte d'état (SMP) et/ou traitées et/ou évaluées.

37. Procédé selon les revendications 1, 2 ou 3,
caractérisé en ce que la au moins une carte d'état comprend :
- une section d'identification de poste (A),
- une pile de données d'état (B), et
- une section de traitement de données (C).

38. Procédé selon la revendication 37, caractérisé en ce que la section d'identification (A) comprend un tableau (A1), par l'intermédiaire duquel, à chaque identificateur de système et/ou poste dans le système, est associé, en cas de besoin, son identification topologique et/ou un identificateur topologique dans le réseau.

39. Procédé selon la revendication 37, caractérisé en ce que la pile de données (B) comprend un nombre de piles de registres (B1 à B4) correspondant au nombre des critères de signaux à vérifier, piles dans lesquelles et/ou par lesquelles des données d'état peuvent être acheminées de manière correspondante à leur vieillissement.

40. Procédé selon la revendication 37, caractérisé en ce que le tronçon de traitement de données (C) présente au moins une zone pour la sélection de données (C1) et une zone pour le traitement de données (C2), des données d'état pouvant être sélectionnés et/ou reclassées au moins selon des valeurs minimale et maximale, dans la première zone, et/ou des données, indicatives de modifications, pouvant être générées, à partir des données d'état, en fonction de leur âge et/ou de leur occurrence temporelle, dans la dernière zone.

41. Procédé selon au moins l'une des revendications précédentes, caractérisé en ce qu'il est mis en oeuvre dans un moyen de circulation.
